# EUROPEAN PATENT APPLICATION

(11) **EP 4 586 603 A1**
(43) Date of publication of application: **16.07.2025**
(21) Application number: 24218401.8
(22) Date of filing: 09.12.2024
(51) Int. Cl.: H04N 7/18, G06V 20/52

(54) **RANGE EXTENSION FOR OBJECT DETECTION IN MACHINE VISION SYSTEMS**

(30) Priority: 10.01.2024 FI 20245015
(71) Applicant: Nokia Solutions and Networks Oy, 02610 Espoo (FI)
(72) Inventor: HOSANGADI, Gurudutt, Hackettstown - NJ (US); FIRYARIDI, Violetta, Budapest (HU)
(74) Representative: Nokia EPO representatives

(57) **Abstract**

Various example embodiments for supporting object detection in machine vision systems are presented herein. Various example embodiments for supporting object detection in machine vision systems may be configured to support range extension for object detection in machine vision systems. Various example embodiments for supporting object detection in machine vision systems may be configured to support elastic and efficient range extension for object detection in machine vision systems. Various example embodiments for supporting elastic and efficient range extension for object detection in machine vision systems may be configured to supporting elastic and efficient range extension for object detection in machine vision systems based on use of image slicing.

## Description

### TECHNICAL FIELD

Various example embodiments relate generally to machine vision systems and, more particularly but not exclusively, to object detection in machine vision systems.

### BACKGROUND

Machine vision systems may employ camera systems for object detection in various contexts, such as industrial automation, autonomous vehicle tracking, and so forth. Machine vision systems are configured to perform object tracking for tracking various types of objects in such contexts. There are various challenges associated with implementation of machine vision systems, including with object detection for various types of obj ects, management of resources needed to support object detection, and so forth.

### SUMMARY

In at least some example embodiments, an apparatus includes at least one processor and at least one memory storing instructions which, when executed by the at least one processor, cause the apparatus at least to detect, within an environment monitored by a set of cameras, an object, determine, from the set of cameras based on a determination that the object is no longer detected, a set of cameras for which image slicing is to be activated, wherein the set of cameras for which image slicing is to be activated includes a first camera on which the object was last detected before no longer being detected and a second camera determined to be closest to a location of the object when the object was last detected, obtain a set of images, wherein the set of images includes, from each camera in the set of cameras for which image slicing is to be activated, a respective image for the respective camera, obtain, from the set of images based on application of image slicing to each of the images in the set of images, a set of selected image slices, and determine, based on processing of the set of selected image slices, a location of the object within the environment. In at least some example embodiments, to detect the object, the instructions, when executed by the at least one processor, cause the apparatus at least to determine, for a camera from the set of cameras on which the object is detected, a distance between a location of the camera and a location of the object, and detect the object based on a determination that the distance between the location of the camera and the location of the object satisfies a threshold. In at least some example embodiments, to detect the object, the instructions, when executed by the at least one processor, cause the apparatus at least to activate, periodically based on a determination that a layout of the set of cameras is not known, image slicing for each of the cameras in the set of cameras, and detect the object based on the image slicing for each of the cameras in the set of cameras. In at least some example embodiments, the set of cameras for which image slicing is to be activated is determined based on a determination that a length of time since the object was last detected satisfies a threshold. In at least some example embodiments, the second camera from the set of cameras is determined to be closest to the location of the object when the object was last detected based on a determination that the second camera has a field of view closest to the location of the object when the object was last detected. In at least some example embodiments, to select the second camera, the instructions, when executed by the at least one processor, cause the apparatus at least to compute, for each camera in the set of cameras, a respective field of view of the camera, determine a set of distance values that includes, for each camera in the set of cameras, a respective distance between a location of the object when the object was last detected and the respective field of view of the camera, and select, based on the set of distance values, the second camera from the set of cameras determined to be closest to the location of the object when the object was last detected. In at least some example embodiments, to compute the respective field of view of the camera, the instructions, when executed by the at least one processor, cause the apparatus at least to receive a homography matrix computed using a reference image resolution matching an image resolution of the respective image from the respective camera, obtain a set of points by computing, for each pixel in a set of pixels of the respective image based on the homography matrix, a respective point specifying a physical location of an area captured by the respective pixel, filter, from the set of points to form a filtered set of points, any point in the set of points that exceeds a predefined distance threshold, and compute, based on a convex shape construction and using the filtered set of points, the respective field of view of the camera. In at least some example embodiments, to obtain the set of selected image slices, the instructions, when executed by the at least one processor, cause the apparatus at least to obtain, for each image in the set of images, a respective set of image slices for the respective image based on application of image slicing to the respective image in the set of images, and obtain the set of selected image slices by selecting, from each of the set of images slices formed from application of image slicing to the respective image in the set of images, at least a portion of the image slices in the respective set of image slices. In at least some example embodiments, to obtain the respective set of image slices for the respective image based on application of image slicing to the respective image in the set of images, the instructions, when executed by the at least one processor, cause the apparatus at least to determine a number of slices into which to slice the respective image in the set of images, and perform, based on the number of slices into which to slice the respective image in the set of images, slicing of the respective image in the set of images to form the respective set of image slices for the respective image in the set of images. In at least some example embodiments, the number of slices into which the slice the respective image in the set of images is determined based on at least one of a distance between the camera that captured the respective image and the object or a number of pixels in a bounding box of detection of the object. In at least some example embodiments, the at least a portion of the image slices in the respective set of image slices for the respective image in the set of images is selected based on a region of interest (ROI)-based slice selection algorithm. In at least some example embodiments, to select the at least a portion of the image slices in the respective set of image slices to form the respective set of selected image slices, the instructions, when executed by the at least one processor, cause the apparatus at least to collect a set of bounding boxes for the object, combine the set of bounding boxes for the object into a united bounding box for the object, slice the image from the camera into N image slices and obtain, for each image slice of the N image slices of the respective image, the respective coordinates of the respective image slice, and, for each of the image slices, calculate an intersection over union (IoU) between the respective image slice and the united bounding box and, based on a determination that the respective IoU for the respective image slice satisfies a threshold then select the respective image slice for inclusion in the respective set of selected image slices. In at least some example embodiments, the at least a portion of the image slices in the respective set of image slices for the respective image in the set of images is selected based on a crop-based slice selection algorithm. In at least some example embodiments, to select the at least a portion of the image slices in the respective set of image slices to form the respective set of selected image slices, the instructions, when executed by the at least one processor, cause the apparatus at least to collect a set of bounding boxes for the object, combine the set of bounding boxes for the object into a united bounding box for the object, expand, based on a defined image size of a machine learning (ML) model, the united bounding box to form a region of interest, crop, based on a determination a size of the region of interest is greater than the defined image size of the ML model in at least one of a height parameter or a width parameter, the bounding box region from the image to form a cropped image, and slice the cropped image to obtain the respective set of selected image slices. In at least some example embodiments, the cropped image is sliced to obtain the respective set of image slices based on the size of the region of interest and the defined image size of the ML model.

In at least some example embodiments, a non-transitory computer-readable medium stores computer program instructions which, when executed by an apparatus, cause the apparatus at least to detect, within an environment monitored by a set of cameras, an object, determine, from the set of cameras based on a determination that the object is no longer detected, a set of cameras for which image slicing is to be activated, wherein the set of cameras for which image slicing is to be activated includes a first camera on which the object was last detected before no longer being detected and a second camera determined to be closest to a location of the object when the object was last detected, obtain a set of images, wherein the set of images includes, from each camera in the set of cameras for which image slicing is to be activated, a respective image for the respective camera, obtain, from the set of images based on application of image slicing to each of the images in the set of images, a set of selected image slices, and determine, based on processing of the set of selected image slices, a location of the object within the environment. In at least some example embodiments, to detect the object, the computer program instructions, when executed by the apparatus, cause the apparatus at least to determine, for a camera from the set of cameras on which the object is detected, a distance between a location of the camera and a location of the object, and detect the object based on a determination that the distance between the location of the camera and the location of the object satisfies a threshold. In at least some example embodiments, to detect the object, the computer program instructions, when executed by the apparatus, cause the apparatus at least to activate, periodically based on a determination that a layout of the set of cameras is not known, image slicing for each of the cameras in the set of cameras, and detect the object based on the image slicing for each of the cameras in the set of cameras. In at least some example embodiments, the set of cameras for which image slicing is to be activated is determined based on a determination that a length of time since the object was last detected satisfies a threshold. In at least some example embodiments, the second camera from the set of cameras is determined to be closest to the location of the object when the object was last detected based on a determination that the second camera has a field of view closest to the location of the object when the object was last detected. In at least some example embodiments, to select the second camera, the computer program instructions, when executed by the apparatus, cause the apparatus at least to compute, for each camera in the set of cameras, a respective field of view of the camera, determine a set of distance values that includes, for each camera in the set of cameras, a respective distance between a location of the object when the object was last detected and the respective field of view of the camera, and select, based on the set of distance values, the second camera from the set of cameras determined to be closest to the location of the object when the object was last detected. In at least some example embodiments, to compute the respective field of view of the camera, the computer program instructions, when executed by the apparatus, cause the apparatus at least to receive a homography matrix computed using a reference image resolution matching an image resolution of the respective image from the respective camera, obtain a set of points by computing, for each pixel in a set of pixels of the respective image based on the homography matrix, a respective point specifying a physical location of an area captured by the respective pixel, filter, from the set of points to form a filtered set of points, any point in the set of points that exceeds a predefined distance threshold, and compute, based on a convex shape construction and using the filtered set of points, the respective field of view of the camera. In at least some example embodiments, to obtain the set of selected image slices, the computer program instructions, when executed by the apparatus, cause the apparatus at least to obtain, for each image in the set of images, a respective set of image slices for the respective image based on application of image slicing to the respective image in the set of images, and obtain the set of selected image slices by selecting, from each of the set of images slices formed from application of image slicing to the respective image in the set of images, at least a portion of the image slices in the respective set of image slices. In at least some example embodiments, to obtain the respective set of image slices for the respective image based on application of image slicing to the respective image in the set of images, the computer program instructions, when executed by the apparatus, cause the apparatus at least to determine a number of slices into which to slice the respective image in the set of images, and perform, based on the number of slices into which to slice the respective image in the set of images, slicing of the respective image in the set of images to form the respective set of image slices for the respective image in the set of images. In at least some example embodiments, the number of slices into which the slice the respective image in the set of images is determined based on at least one of a distance between the camera that captured the respective image and the object or a number of pixels in a bounding box of detection of the object. In at least some example embodiments, the at least a portion of the image slices in the respective set of image slices for the respective image in the set of images is selected based on a region of interest (ROI)-based slice selection algorithm. In at least some example embodiments, to select the at least a portion of the image slices in the respective set of image slices to form the respective set of selected image slices, the computer program instructions, when executed by the apparatus, cause the apparatus at least to collect a set of bounding boxes for the object, combine the set of bounding boxes for the object into a united bounding box for the object, slice the image from the camera into N image slices and obtain, for each image slice of the N image slices of the respective image, the respective coordinates of the respective image slice, and, for each of the image slices, calculate an intersection over union (IoU) between the respective image slice and the united bounding box and, based on a determination that the respective IoU for the respective image slice satisfies a threshold then select the respective image slice for inclusion in the respective set of selected image slices. In at least some example embodiments, the at least a portion of the image slices in the respective set of image slices for the respective image in the set of images is selected based on a crop-based slice selection algorithm. In at least some example embodiments, to select the at least a portion of the image slices in the respective set of image slices to form the respective set of selected image slices, the computer program instructions, when executed by the apparatus, cause the apparatus at least to collect a set of bounding boxes for the object, combine the set of bounding boxes for the object into a united bounding box for the object, expand, based on a defined image size of a machine learning (ML) model, the united bounding box to form a region of interest, crop, based on a determination a size of the region of interest is greater than the defined image size of the ML model in at least one of a height parameter or a width parameter, the bounding box region from the image to form a cropped image, and slice the cropped image to obtain the respective set of selected image slices. In at least some example embodiments, the cropped image is sliced to obtain the respective set of image slices based on the size of the region of interest and the defined image size of the ML model.

In at least some example embodiments, a method includes detecting, within an environment monitored by a set of cameras, an object, determining, from the set of cameras based on a determination that the object is no longer detected, a set of cameras for which image slicing is to be activated, wherein the set of cameras for which image slicing is to be activated includes a first camera on which the object was last detected before no longer being detected and a second camera determined to be closest to a location of the object when the object was last detected, obtaining a set of images, wherein the set of images includes, from each camera in the set of cameras for which image slicing is to be activated, a respective image for the respective camera, obtaining, from the set of images based on application of image slicing to each of the images in the set of images, a set of selected image slices, and determining, based on processing of the set of selected image slices, a location of the object within the environment. In at least some example embodiments, detecting the object includes determining, for a camera from the set of cameras on which the object is detected, a distance between a location of the camera and a location of the object, and detecting the object based on a determination that the distance between the location of the camera and the location of the object satisfies a threshold. In at least some example embodiments, detecting the object includes activating, periodically based on a determination that a layout of the set of cameras is not known, image slicing for each of the cameras in the set of cameras, and detecting the object based on the image slicing for each of the cameras in the set of cameras. In at least some example embodiments, the set of cameras for which image slicing is to be activated is determined based on a determination that a length of time since the object was last detected satisfies a threshold. In at least some example embodiments, the second camera from the set of cameras is determined to be closest to the location of the object when the object was last detected based on a determination that the second camera has a field of view closest to the location of the object when the object was last detected. In at least some example embodiments, selecting the second camera includes computing, for each camera in the set of cameras, a respective field of view of the camera, determining a set of distance values that includes, for each camera in the set of cameras, a respective distance between a location of the object when the object was last detected and the respective field of view of the camera, and selecting, based on the set of distance values, the second camera from the set of cameras determined to be closest to the location of the object when the object was last detected. In at least some example embodiments, computing the respective field of view of the camera includes receiving a homography matrix computed using a reference image resolution matching an image resolution of the respective image from the respective camera, obtaining a set of points by computing, for each pixel in a set of pixels of the respective image based on the homography matrix, a respective point specifying a physical location of an area captured by the respective pixel, filtering, from the set of points to form a filtered set of points, any point in the set of points that exceeds a predefined distance threshold, and computing, based on a convex shape construction and using the filtered set of points, the respective field of view of the camera. In at least some example embodiments, obtaining the set of selected image slices includes obtaining, for each image in the set of images, a respective set of image slices for the respective image based on application of image slicing to the respective image in the set of images, and obtaining the set of selected image slices by selecting, from each of the set of images slices formed from application of image slicing to the respective image in the set of images, at least a portion of the image slices in the respective set of image slices. In at least some example embodiments, obtaining the respective set of image slices for the respective image based on application of image slicing to the respective image in the set of images includes determining a number of slices into which to slice the respective image in the set of images, and performing, based on the number of slices into which to slice the respective image in the set of images, slicing of the respective image in the set of images to form the respective set of image slices for the respective image in the set of images. In at least some example embodiments, the number of slices into which the slice the respective image in the set of images is determined based on at least one of a distance between the camera that captured the respective image and the object or a number of pixels in a bounding box of detection of the object. In at least some example embodiments, the at least a portion of the image slices in the respective set of image slices for the respective image in the set of images is selected based on a region of interest (ROI)-based slice selection algorithm. In at least some example embodiments, selecting the at least a portion of the image slices in the respective set of image slices to form the respective set of selected image slices includes collecting a set of bounding boxes for the object, combining the set of bounding boxes for the object into a united bounding box for the object, slicing the image from the camera into N image slices and obtaining, for each image slice of the N image slices of the respective image, the respective coordinates of the respective image slice, and, for each of the image slices, calculating an intersection over union (IoU) between the respective image slice and the united bounding box and, based on a determination that the respective IoU for the respective image slice satisfies a threshold then selecting the respective image slice for inclusion in the respective set of selected image slices. In at least some example embodiments, the at least a portion of the image slices in the respective set of image slices for the respective image in the set of images is selected based on a crop-based slice selection algorithm. In at least some example embodiments, selecting the at least a portion of the image slices in the respective set of image slices to form the respective set of selected image slices includes collecting a set of bounding boxes for the object, combining the set of bounding boxes for the object into a united bounding box for the object, expanding, based on a defined image size of a machine learning (ML) model, the united bounding box to form a region of interest, cropping, based on a determination a size of the region of interest is greater than the defined image size of the ML model in at least one of a height parameter or a width parameter, the bounding box region from the image to form a cropped image, and slicing the cropped image to obtain the respective set of selected image slices. In at least some example embodiments, the cropped image is sliced to obtain the respective set of image slices based on the size of the region of interest and the defined image size of the ML model.

In at least some example embodiments, an apparatus includes means for detecting, within an environment monitored by a set of cameras, an object, means for determining, from the set of cameras based on a determination that the object is no longer detected, a set of cameras for which image slicing is to be activated, wherein the set of cameras for which image slicing is to be activated includes a first camera on which the object was last detected before no longer being detected and a second camera determined to be closest to a location of the object when the object was last detected, means for obtaining a set of images, wherein the set of images includes, from each camera in the set of cameras for which image slicing is to be activated, a respective image for the respective camera, means for obtaining, from the set of images based on application of image slicing to each of the images in the set of images, a set of selected image slices, and means for determining, based on processing of the set of selected image slices, a location of the object within the environment. In at least some example embodiments, the means for detecting the object includes means for determining, for a camera from the set of cameras on which the object is detected, a distance between a location of the camera and a location of the object, and means for detecting the object based on a determination that the distance between the location of the camera and the location of the object satisfies a threshold. In at least some example embodiments, the means for detecting the object includes means for activating, periodically based on a determination that a layout of the set of cameras is not known, image slicing for each of the cameras in the set of cameras, and means for detecting the object based on the image slicing for each of the cameras in the set of cameras. In at least some example embodiments, the set of cameras for which image slicing is to be activated is determined based on a determination that a length of time since the object was last detected satisfies a threshold. In at least some example embodiments, the second camera from the set of cameras is determined to be closest to the location of the object when the object was last detected based on a determination that the second camera has a field of view closest to the location of the object when the object was last detected. In at least some example embodiments, the means for selecting the second camera includes means for computing, for each camera in the set of cameras, a respective field of view of the camera, means for determining a set of distance values that includes, for each camera in the set of cameras, a respective distance between a location of the object when the object was last detected and the respective field of view of the camera, and means for selecting, based on the set of distance values, the second camera from the set of cameras determined to be closest to the location of the object when the object was last detected. In at least some example embodiments, the means for computing the respective field of view of the camera includes means for receiving a homography matrix computed using a reference image resolution matching an image resolution of the respective image from the respective camera, means for obtaining a set of points by computing, for each pixel in a set of pixels of the respective image based on the homography matrix, a respective point specifying a physical location of an area captured by the respective pixel, means for filtering, from the set of points to form a filtered set of points, any point in the set of points that exceeds a predefined distance threshold, and means for computing, based on a convex shape construction and using the filtered set of points, the respective field of view of the camera. In at least some example embodiments, the means for obtaining the set of selected image slices includes means for obtaining, for each image in the set of images, a respective set of image slices for the respective image based on application of image slicing to the respective image in the set of images, and means for obtaining the set of selected image slices by selecting, from each of the set of images slices formed from application of image slicing to the respective image in the set of images, at least a portion of the image slices in the respective set of image slices. In at least some example embodiments, the means for obtaining the respective set of image slices for the respective image based on application of image slicing to the respective image in the set of images includes means for determining a number of slices into which to slice the respective image in the set of images, and means for performing, based on the number of slices into which to slice the respective image in the set of images, slicing of the respective image in the set of images to form the respective set of image slices for the respective image in the set of images. In at least some example embodiments, the number of slices into which the slice the respective image in the set of images is determined based on at least one of a distance between the camera that captured the respective image and the object or a number of pixels in a bounding box of detection of the object. In at least some example embodiments, the at least a portion of the image slices in the respective set of image slices for the respective image in the set of images is selected based on a region of interest (ROI)-based slice selection algorithm. In at least some example embodiments, the means for selecting the at least a portion of the image slices in the respective set of image slices to form the respective set of selected image slices includes means for collecting a set of bounding boxes for the object, means for combining the set of bounding boxes for the object into a united bounding box for the object, means for slicing the image from the camera into N image slices and means for obtaining, for each image slice of the N image slices of the respective image, the respective coordinates of the respective image slice, and, means for, for each of the image slices, calculating an intersection over union (IoU) between the respective image slice and the united bounding box and, based on a determination that the respective IoU for the respective image slice satisfies a threshold then selecting the respective image slice for inclusion in the respective set of selected image slices. In at least some example embodiments, the at least a portion of the image slices in the respective set of image slices for the respective image in the set of images is selected based on a crop-based slice selection algorithm. In at least some example embodiments, the means for selecting the at least a portion of the image slices in the respective set of image slices to form the respective set of selected image slices includes means for collecting a set of bounding boxes for the object, means for combining the set of bounding boxes for the object into a united bounding box for the object, means for expanding, based on a defined image size of a machine learning (ML) model, the united bounding box to form a region of interest, means for cropping, based on a determination a size of the region of interest is greater than the defined image size of the ML model in at least one of a height parameter or a width parameter, the bounding box region from the image to form a cropped image, and means for slicing the cropped image to obtain the respective set of selected image slices. In at least some example embodiments, the cropped image is sliced to obtain the respective set of image slices based on the size of the region of interest and the defined image size of the ML model.

### BRIEF DESCRIPTION OF THE DRAWINGS

The teachings herein can be readily understood by considering the following detailed description in conjunction with the accompanying drawings, in which:
FIG. 1 depicts an example embodiment of an environment including an object detection and tracking system configured to perform object detection and tracking for objects within the environment;
FIG. 2 depicts an example embodiment of a method for performing object detection and tracking in a multi-camera system;
FIG. 3 depicts an example embodiment of a method for computing a field of view of a camera based on a homography matrix and a distance limit;
FIG. 4 depicts an example embodiment of a slicing activation pipeline for supporting image slicing activation in a multi-camera system;
FIG. 5 depicts an example embodiment of a method for implementing a slicing activation pipeline;
FIG. 6 depicts an example embodiment of a method for camera selection for use in image slicing for object detection;
FIG. 7 depicts an example embodiment of a method for closest camera selection for use in image slicing for object detection;
FIG. 8 depicts an example embodiment of a method for use of a combination of periodic monitoring and camera selection for use in image slicing for object detection;
FIG. 9 depicts example embodiments of image slicing activation and image slicing deactivation as a function of the position of the object of interest that is being detected relative to the camera;
FIG. 10 depicts an example embodiment of a method for selecting cameras for use in image slicing for object detection;
FIG. 11 depicts an example embodiment of slicing of an image via a set of horizontal splits and a set of vertical splits to achieve a set of image slices of the image;
FIG. 12 depicts an example embodiment for varying the number of image slices used in slicing as a function of the distance of the object to the camera location;
FIG. 13 depicts an example embodiment for varying the number of image slices used in slicing as a function of a number of pixels in the bounding box or a contour of the detection;
FIG. 14 depicts an example embodiment of a method for determining the number of image slices to be used when slicing an image as a function of distance or number of pixels;
FIG. 15 depicts an example embodiment of a method for determining the number of image slices to be used when slicing an image for use in object detection;
FIG. 16 depicts selection of a subset of image slices of an image based on a region of interest (ROI)-based slice selection algorithm;
FIG. 17 depicts an example embodiment of an ROI-based slice selection algorithm configured to select a subset of image slices of an image for processing;
FIG. 18 depicts selection of a subset of image slices of an image based on a crop-based slice selection algorithm;
FIG. 19 depicts an example embodiment of a crop-based slice selection algorithm configured to select a subset of image slices of an image for processing;
FIG. 20 depicts an example embodiment of an object tracking system configured to perform object tracking for a set of objects in an environment; and
FIG. 21 depicts an example embodiment of a computer suitable for use in performing various functions presented herein.

To facilitate understanding, identical reference numerals have been used herein, wherever possible, in order to designate identical elements that are common among the various figures.

### DETAILED DESCRIPTION

Various example embodiments for supporting object detection in machine vision systems are presented herein. Various example embodiments for supporting object detection in machine vision systems may be configured to support range extension for object detection in machine vision systems. Various example embodiments for supporting object detection in machine vision systems may be configured to support elastic and efficient range extension for object detection in machine vision systems. Various example embodiments for supporting elastic and efficient range extension for object detection in machine vision systems may be configured to support elastic and efficient range extension for object detection in machine vision systems by selecting a set of cameras for which image slicing is to be used, capturing images from the set of cameras for which image slicing is to be used, and processing the images from the set of cameras for which image slicing is to be used for object detection (e.g., determining the number of slices to be used, performing image slicing, selecting which image slices to process for object detection, processing selected image slices for object detection, combining detections across image slices, or the like, as well as various combinations thereof) and, optionally, for other functions related to object detection (e.g., object localization, object tracking, object control, or the like, as well as various combinations thereof). Various example embodiments for supporting elastic and efficient range extension for object detection in machine vision systems may be configured to support elastic and efficient range extension for object detection in machine vision systems in various environments supporting object detection for various object types (e.g., detection of autonomous objects in autonomous factories, autonomous mining, autonomous shipping fulfilment, autonomous vehicle tracking systems, or the like as well as various combinations thereof).

Various example embodiments for supporting object detection in machine vision systems may be configured to support range extension for object detection in machine vision systems. Machine vision systems are core components of various types of systems which perform vision-based object tracking - such as automation systems in Industry 4.0/5.0, vehicle tracking in autonomous vehicle systems, and so forth - as camera sensors provide a rich source of information about the physical space in which the cameras are installed. Object detection continues to play an important role in machine vision systems. Many machine vision systems utilize machine learning (ML) models for object detection due to the superior performance generally associated with use of such ML models; however, since such ML models often consume significant amounts of resources both during training and inference, such ML models are often kept at reasonable sizes by training on images having relatively small image sizes. This, however, leads to the following issue: detecting and recognizing objects that appear small, due either to their distance or their size, is a greater challenge as the relatively small image size used during training of the models means that fewer pixels capture the objects of interest in the image plane, thereby affecting the probability of detection. This problem is compounded further when the object is moving in large spaces (e.g., factories, warehouses, or the like) with only few coverage areas by camera sensors (e.g., where robots are moving in long corridors with a relatively sparse density of fixed cameras). Various example embodiments for supporting object detection in machine vision systems may be configured to support range extension for object detection in machine vision systems using image slicing, without a need for retraining of ML models and while keeping overall computational complexity relatively low, based on use of intelligent selection of cameras for which slicing is to be activated, intelligent determination of the number of slices to be used, intelligent slicing of images to form image slices, intelligent selection of image slices to process for object detection, intelligent combining of object detections across image slices, and so forth.

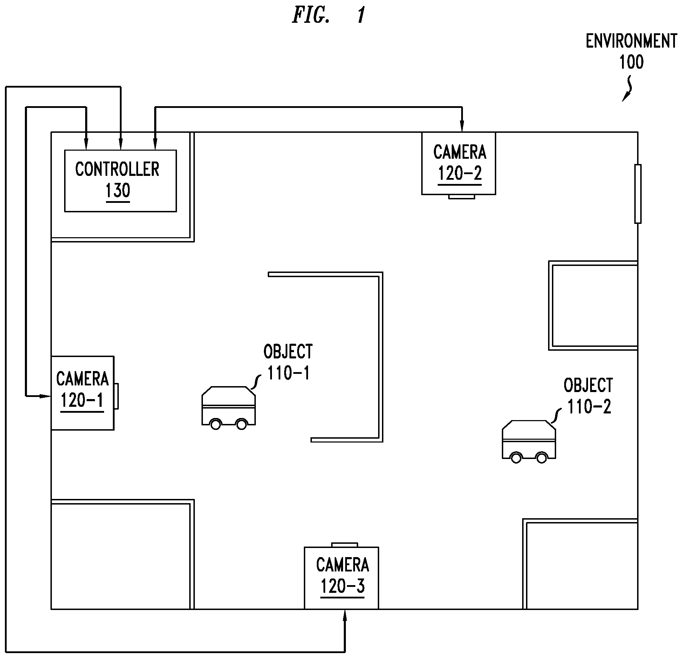

It will be appreciated that these as well as various other example embodiments for supporting elastic and efficient range extension for object detection in machine vision systems may be further understood by considering a machine vision system in the form of a multi-camera system that is configured to perform object detection and tracking for a set of objects in an environment, as presented with respect to FIG. 1.

FIG. 1 depicts an example embodiment of an environment including an object detection and tracking system configured to perform object detection and tracking for objects within the environment.

As depicted in FIG. 1, an environment 100 includes a set of objects 110 to be detected and tracked within the environment 100 (illustratively, two objects 110 denoted as object 110-1 and object 110-2), a set of cameras 120 configured to capture images within the environment 100 (illustratively, three cameras 120 denoted as camera 120-1, camera 120-2, and camera 120-3), and a controller 130 configured to perform processing of images captured by the cameras 120 to support detection and tracking of the objects 110 within the environment 100. It is noted that the cameras 120 and the controller 130 may cooperate to provide an object detection and tracking system configured to support detection and tracking of the objects 110 within the environment 100.

The environment 100 may include a physical space within which object detection and tracking may be performed. The physical space may include physical space within which the objects 110 may be located and may move for various purposes and within which the cameras 120 may be deployed at various locations for capturing imagery of the physical space in order to support detection and tracking of the objects 110 within the environment 100. For example, the environment 100 may be a building housing a factory in the case of an autonomous factory, a mining location in the case of an autonomous mining operation, a geographic area associated within a network of roads in the case of an autonomous vehicle tracking service, or the like, as well as various combinations thereof. It will be appreciated that the environment 100 may include various other types of indoor and/or outdoor locations. It will be appreciated that, although primarily presented as having a particular arrangement of the physical space within the environment 100, the physical space within the environment 100 may be implemented in various other ways.

The set of objects 110 may include any objects which may be located within the physical space of the environment 100 and which may move within the physical space of the environment 100, which may depend on the environment type of the environment 100. For example, where the environment 100 is a factory (as illustrated in the example of FIG. 1), the objects 110 may include factory robots, autonomous vehicles, or the like, as well as various combinations thereof. For example, where the environment 100 is a mining location (not illustrated in the example of FIG. 1), the objects 110 may include mining equipment, autonomous vehicles, or the like, as well as various combinations thereof. It will be appreciated that various other types of objects may be detected and tracked in various other contexts. It will be appreciated that, although primarily presented with respect to supporting a set of objects 110 that includes a specific number of objects to be detected and tracked within the environment 100, the set of objects 110 may include fewer or more objects to be detected and tracked within the environment 100.

The set of cameras 120 may include any cameras configured to capture imagery within the physical space of the environment 100. For example, the cameras 120 may be configured to capture imagery including images, videos, or the like, as well as various combinations thereof. The cameras 120 may include local processing resources configured to perform various processing functions in support of object detection and tracking for the set of objects 110 in the environment 100. The cameras 120 may include communication resources configured to support communications between the cameras 120 and the controller 130 for supporting object detection and tracking for the set of objects 110 in the environment 100. It will be appreciated that, although primarily presented with respect to use of a set of cameras 120 that includes a specific number of cameras having specific locations within the physical space of the environment 100, the set of cameras 120 may include fewer or more cameras, may include cameras having different locations within the physical space of the environment 100, or the like, as well as various combinations thereof.

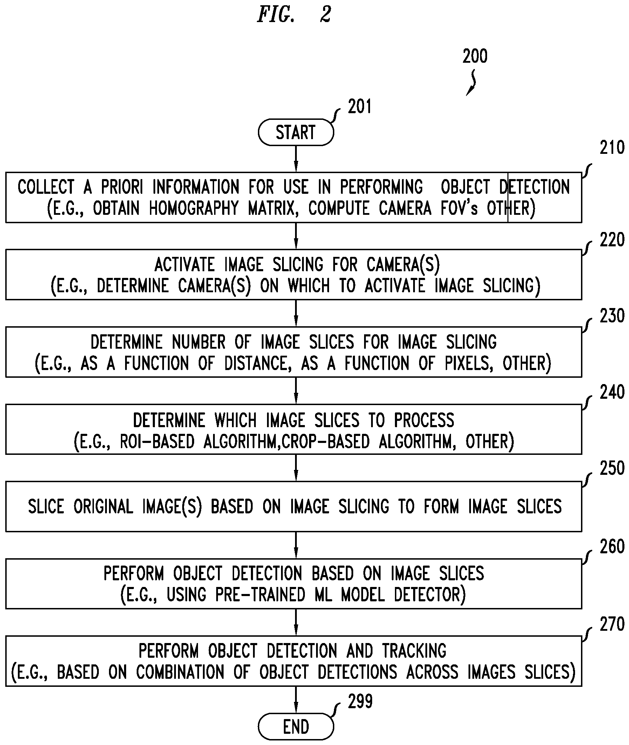

The controller 130 is configured to support detection and tracking of the objects 110 based on imagery captured by the set of cameras 120. The controller 130 is configured to support detection and tracking of the objects 110 based on use of image slicing, including selecting ones of the cameras 120 for which image slicing is to be used, capturing images from the ones of the cameras 120 for which image slicing is to be used, and processing the images from the ones of the cameras 120 for which image slicing is to be used for object detection (e.g., determining the number of image slices to be used, performing image slicing, selecting which image slices to process for object detection, processing selected image slices for object detection, combining detections across image slices, or the like, as well as various combinations thereof). It will be appreciated that the operation of the controller 130 in performing detection and tracking of the set of objects 110 based on application of image slicing to the imagery captured by the set of cameras 120 may be further understood by way of reference to FIG. 2. It will be appreciated that, although primarily presented with respect to use of a single controller 130 that is located within the physical space of the environment 100, the controller 130 may be implemented in various other ways (e.g., using multiple local controllers which are located within or otherwise associated with the environment 100, using one or more edge computing devices or edge computing resources accessible from the environment 100, using one or more cloud computing devices or cloud computing resources accessible from the environment 100, or the like, as well as various combinations thereof).

It will be appreciated that the environment 100 may be implemented in various other ways for supporting object detection and tracking.

FIG. 2 depicts an example embodiment of a method for performing object detection and tracking in a multi-camera system. It will be appreciated that, although primarily presented as being performed serially, at least a portion of the functions of the method 200 may be performed contemporaneously or in a different order than as presented with respect to FIG. 2.

At block 201, the method 200 begins.

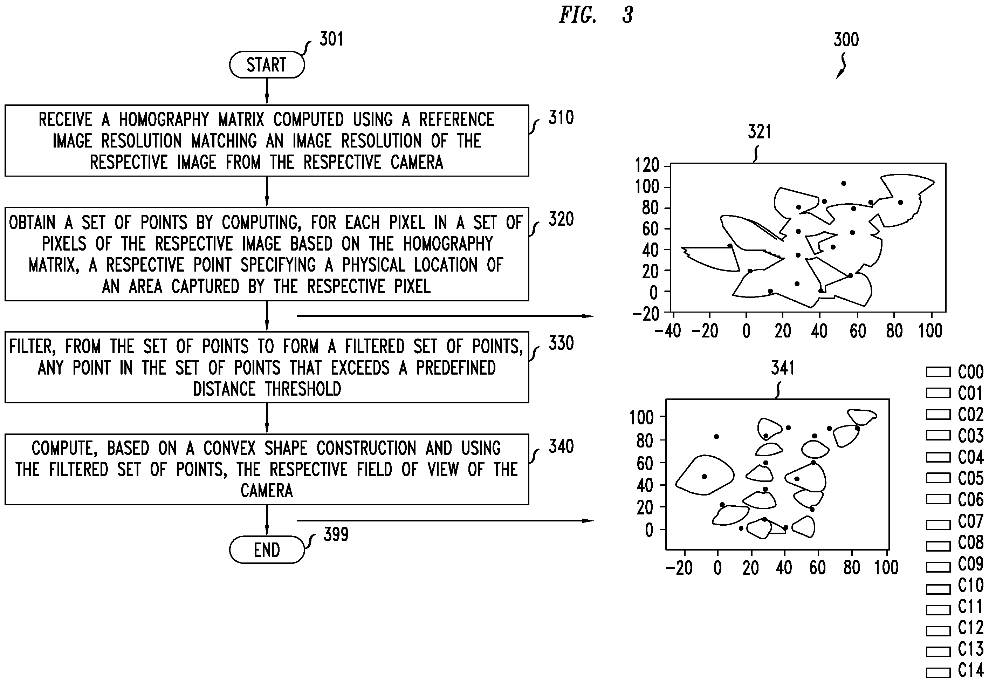

At block 210 (also referred to herein as Step 1), collect a priori information for use in performing object detection. The a priori information collection may include computing or otherwise obtaining a homography matrix, computing the camera FOVs of the cameras based on the homography matrix, or the like, as well as various combinations thereof. It will be appreciated that various aspects of a priori information collection are discussed further below, and at least some example embodiments of a priori information collection may be further understood by way of reference to FIG. 3.

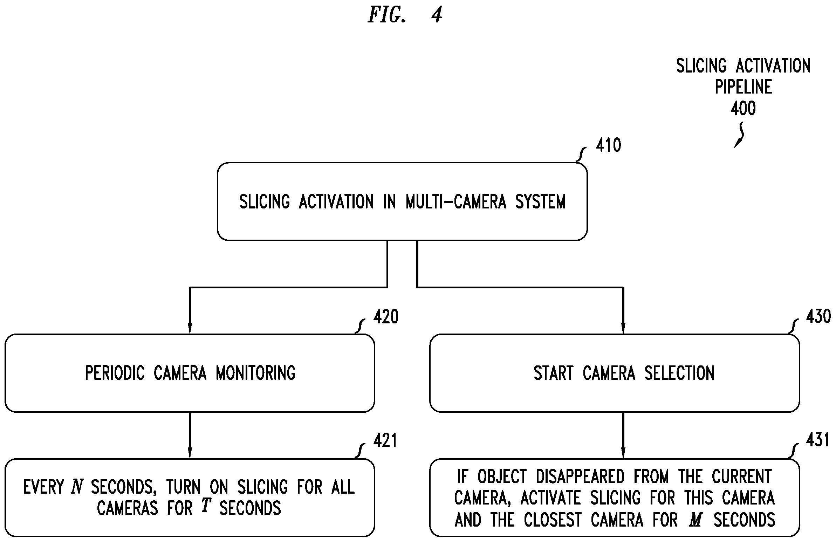

At block 220 (also referred to herein as Step 2), activate image slicing for one or more cameras. The activation of image slicing may include selection of the one or more cameras for which image slicing is to be activated, initiation of slicing activation for the one or more cameras for which image slicing is to be activated, or the like, as well as various combinations thereof. The selection of the camera(s) for which image slicing is activated may be based on use of a combination of periodic monitoring and distance metrics that are related to the location of the object relative to camera location and field of view. It is noted that use of image slicing enables an extension of the range of object detection and an improvement in the ability to detect small objects. It will be appreciated that various aspects of image slicing activation are discussed further below, and at least some example embodiments of image slicing activation may be further understood by way of reference to FIGs. 4 - 10.

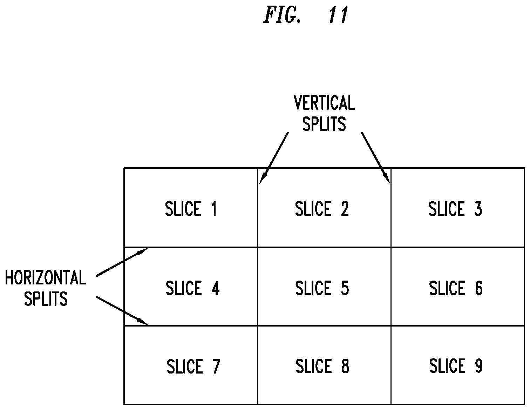

At block 230 (also referred to herein as Step 3), determine the number of image slices to be used for image slicing. The determination of the number of image slices to be used for image slicing may be based on either or both of varying the number of image slices as a function of distance of the object (based on the last detection) to the camera location or varying the number of image slices as a function of a number of pixels in the bounding box or contour of the detection. It will be appreciated that various aspects of determining the number of image slices to be used for image slicing are discussed further below, and at least some example embodiments of determining the number of image slices to be used for image slicing may be further understood by way of reference to FIGs. 11 - 14.

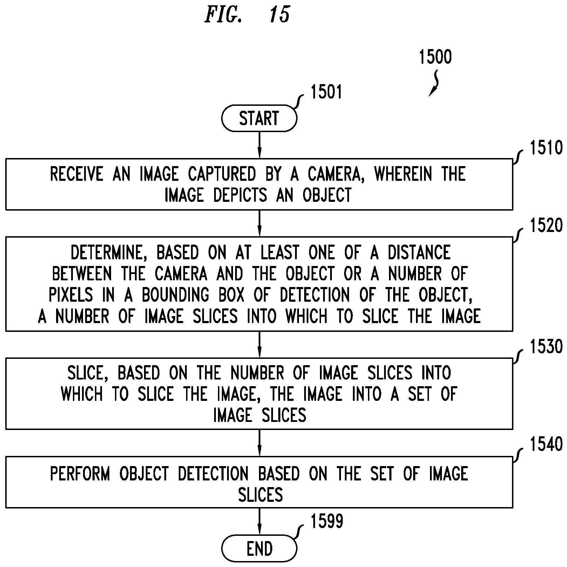

At block 240 (also referred to herein as Step 4), determine which image slices to process. The determination as to which image slices to process may be based on compute constraints associated with performing the slice processing, which may vary in different contexts. The determination as to which image slices to process may be based on a region of interest (ROI)-based slice selection algorithm or a crop-based slice selection algorithm. It will be appreciated that various aspects of determining which image slices to process are discussed further below, and at least some example embodiments of determining which image slices to process may be further understood by way of reference to FIGs. 15 - 18.

At block 250 (also referred to herein as Step 5), image slicing is performed to slice an original image captured by the camera selected for activation of image slicing. The image slicing is performed to obtain the image slices that have been selected for processing for object detection. The result of the image slicing of the image is a set of image slices including the image slices to be processed for object detection.

At block 260 (also referred to herein as Step 6), object detection is performed for each of the image slices to be processed. The object detection for an image slice may be performed based on pre-trained ML model detector. The result of the object detection performed on each image slice is a set of object detections for each image slice in the set of image slices to be processed.

At block 270 (also referred to herein as Step 7), object detection and tracking is performed. The object detection and tracking may be performed by combining the set of object detections for each image slice in the set of image slices to be processed. The result of the object detection and tracking is a set of object detection and localization information for the object (e.g., the object has been detected and the location of the object within the environment has been determined).

At block 299, the method 200 ends. It will be appreciated that, although primarily presented as ending (for purposes of clarity), the method 200 may include one or more additional blocks for additional functions which may be performed after the object has been detected, e.g., performing tracking of the object, performing object recognition for the objection, initiating one or more control functions for controlling one or more aspects of the object (e.g., speed, trajectory, function(s) being performed, or the like, as well as various combinations thereof), or the like, as well as various combinations thereof. It will be appreciated that, although primarily presented as ending (for purposes of clarity), the method 200 may continue to be executed and/or re-executed for continued tracking of the object or objects in the environment.

In Step 1 discussed with respect to FIG. 2 (denoted as block 210 in FIG. 2), a priori information collection is performed. In order to develop a camera selection algorithm and have a possibility to choose a next camera for image slicing activation, based on the location of the object in the space, it is an important step to have information on the field of view of the camera. While the field of view of the camera could be determined utilizing camera information of the camera (namely, the focal length of the camera and the camera sensor size of the camera) and the distance from the camera to the subject, in at least some example embodiments the field of view of the camera may be calculated using a homography matrix. The homography matrix transforms pixel image points into a physical space. Given an image size, a homography matrix, and a defined viewing limit, the field of view of the camera may be constructed by performing some preliminary processing to compute the homography matrix and determine a distance limit and then computing the field of view of the camera based on the homography matrix and the distance limit.

The homography matrix may (Φ) may be computed by collecting ground truth data. This involves identifying reference points in the field of view of the camera and, for each reference point, finding the w=(u,v) pixel coordinates and the corresponding real world coordinates r=(x,y). This data is used to compute a transformation matrix (referred to as the homography matrix) which, when fed with the pixel coordinates, predicts the real world coordinates with minimum error relative to the ground truth real world coordinates.

The distance limit (D_{L}) and image resolution are dependent on the camera model used and the configured parameters of the camera. The distance limit is the range of detection for a given camera and ML model used for detection. Typically, this corresponds to the furthest distance within which the smallest size object (from the class of objects for which the model was trained) is detectable. This is determined by applying the trained ML on the video output without image slicing. As an example, in factory employing cameras and an image resolution of 1920x1080, the smallest robot was detected up to 20 meters in most cameras and this is considered to be the distance limit for those cameras.

The field of view of the camera, given the homography matrix and the distance limit, may be computed as follows: (1) get an image with the same resolution that was used to compute the homography matrix, (2) for each pixel of the image, apply the above computed homography matrix to predict the real world coordinate of the pixel (i.e., the physical location of the area capture by the pixel), (3) filter out the points that exceed predefined distance limit, and (4) use the calculated points to construct a continuous shape of the view (e.g., based on convex shape construction, such as based on a Convex Hull construction or other suitable type of convex shape construction). It will be appreciated that these steps are general enough to be applied to any deployed camera and are not specific to a particular location. This process may be further understood by way of reference to FIG. 3.

FIG. 3 depicts an example embodiment of a method for computing a field of view of a camera based on a homography matrix and a distance limit. It will be appreciated that the method 300 of FIG. 3 may be used to implement block 210 of FIG. 2. It will be appreciated that, although omitted for purposes of clarity, the method 300 of FIG. 3 may include one or more preliminary blocks for computing the homography matrix and/or the distance limit. It will be appreciated that, although primarily presented as being performed serially, at least a portion of the functions of the method 300 may be performed contemporaneously or in a different order than as presented with respect to FIG. 3. At block 301, the method 300 begins. At block 310, receive a homography matrix computed using a reference image resolution matching an image resolution of the respective image from the respective camera. At block 320, obtain a set of points by computing, for each pixel in a set of pixels of the respective image based on the homography matrix, a respective point specifying a physical location of an area captured by the respective pixel. The result for a set of cameras is illustrated as block 321. At block 330, filter, from the set of points to form a filtered set of points, any point in the set of points that exceeds a predefined distance threshold. At block 340, compute, based on a convex shape construction and using the filtered set of points, the respective field of view of the camera. The result for a set of cameras is illustrated as block 341. At block 399, the method 300 ends.

In Step 2 discussed with respect to FIG. 2 (denoted as block 220 in FIG. 2), image slicing is activated for one or more cameras. The activation of image slicing may include selection of the camera(s) for which image slicing is to be activated (i.e., deciding where and when a slicing pipeline should be activated). The activation of image slicing may be based on a camera selection algorithm configured to select the camera(s) for which image slicing is to be activated. The camera selection algorithm may be configured to support image slicing activation based on use of a camera selection pipeline coupled with periodic sensing of the environment with a full image slicing activation and, thus, may be divided into two parts as follows: periodic camera monitoring and camera selection pipeline. The camera selection algorithm may be configured to support image slicing activation in a manner that reduces system resource usage. The camera selection algorithm may be further understood by way of reference to FIG. 4 - FIG. 10.

FIG. 4 depicts an example embodiment of a slicing activation pipeline for supporting image slicing activation in a multi-camera system.

As illustrated in FIG. 4, the slicing activation pipeline 400 includes a block 410 for initiating image slicing activation in a multi-camera system, and then proceeds to blocks 420 and 421 for periodic camera monitoring or proceeds to blocks 430 and 431 for camera selection pipeline.

As indicated by blocks 420 and 421, periodic camera monitoring activates image slicing for all cameras to check for moving objects in the long corridor. As indicated by block 421, periodic camera monitoring may be performed by: every N seconds, turn on image slicing for all cameras for T seconds. It will be appreciated that periodic camera monitoring may be useful in the case when the object appears for the first time in the physical space and has not yet been detected by any of the cameras. In other words, periodic camera monitoring helps to have first detection of the distant object in the space.

As indicated by blocks 430 and 431, camera selection selects a camera and activates image slicing for the selected camera and the closest camera to the selected camera. As indicated by block 431, camera selection pipeline may be performed by: if the object disappeared from the current camera, activate image slicing for this camera and the closest camera for M seconds. It will be appreciated that camera selection pipeline may be dependent on events such as the last location that an object was detected and use of layout of the camera network. Typically, camera networks are deployed to address specific use cases such as surveillance or tracking and, thus, the layouts of the camera networks are known; however, in the event that information of camera network layout or camera locations is unavailable, camera selection pipeline may rely on the periodic monitoring to first detect objects in long range and, once this happens, the image slicing will remain activated (such that compute resource usage will still be minimized).

The slicing activation pipeline 400, for controlling intelligent use of periodic camera monitoring and camera selection pipeline, may be supported using two distance metrics as follows: (1) the distance between the location of the object and the field of view of the camera (denoted as D_{cam-fov,obj}) and (2) the distance between the location of the object and the location of the camera (denoted as D_{cam-location,obj}). In the case of D_{cam-fov,obj}, the location of the object may be computed by applying the computed homography matrix (from Step 1) on the predicted pixel location (w) of the detected object: *r̃* = f (*w̃*, *Φ*) and the field of view of the camera is known because it was already computed (in Step 1). In the case of D_{cam-location,obj}, the location of the object is known from computation of the location of the object as discussed with respect to D_{cam-location,obj} (or may be computed in the same manner as discussed above with respect to the D_{cam-location,obj}) and the location of the camera is assumed to be known (e.g., based on CAD, a map of the area of interest, or the like).

In the slicing activation pipeline 400, where the camera selection pipeline is used and the closest camera needs to be determined, the closest camera may be defined as the camera having a field of view that is closest to the current location of the object. Field of view is a shape that is constructed from lines. The distance between the object and FoV may be calculated using an algorithm configured to calculate the distance between a point and a line segment, where the location of the object is considered to be the point and each of the lines forming the FoV is considered. The smallest distance between the point and any line in the FoV is used to determine the closest camera.

It will be appreciated that the camera having the field of view that is closest to the current location of the object may not necessarily be the camera that is physically closest to the current location of the object, as there may be one or more cameras which, although physically closer to the current location of the object, may have an obstructed view of the object and, thus, may not be selected as the closest camera to be used for object detection since the camera will be unable to capture an image of the object that is sufficient for purposes of image processing. This may be seen, for example, in the environment 100 of FIG. 1, where it may be seen that camera 120-2 may not be considered for selection as a closest camera for detection of the object 110-1 because the field of view of the camera 120-2 to the object 110-1 is obstructed by the wall therebetween. It will be appreciated that the determination as to whether a camera has an obstructed view of an object, such that the camera may not be selected as the closest camera for detection of the object, may be performed in various ways. It will be appreciated that a camera determined to have an obstructed view of an object may still be selected as the closest camera for the object based on a determination that the level of obstruct is within an acceptable level of obstruction (e.g., completely unobstructed, less than 1% obstructed, less than 5% obstructed, less than 10% obstructed, or the like) that is known or expected to still enable an acceptable result with respect to object detection and tracking, where the acceptable level of obstruction and/or the acceptable result may vary for different object types, different environment types, or the like, as well as various combinations thereof.

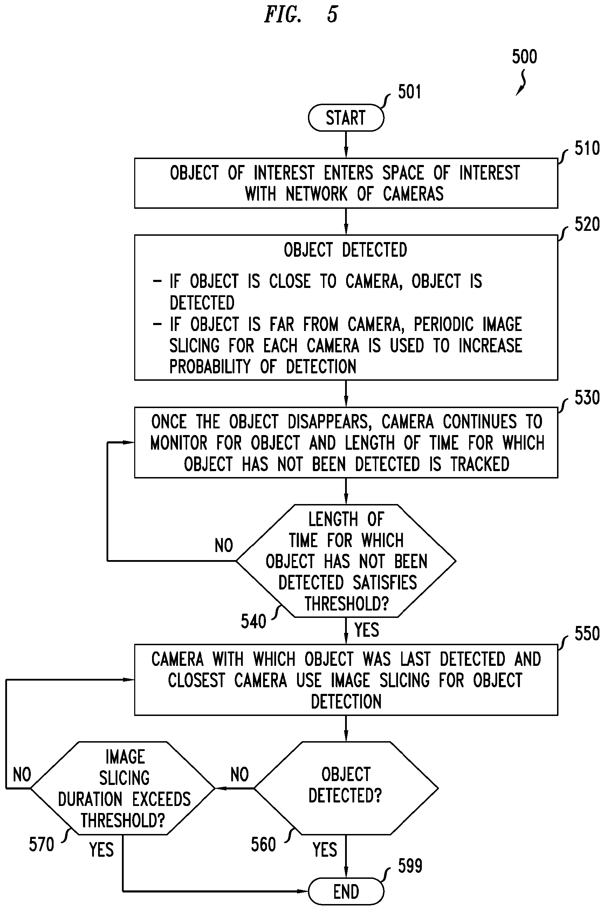

FIG. 5 depicts an example embodiment of a method for implementing a slicing activation pipeline. It will be appreciated that the method 500 of FIG. 5 may be used to implement the slicing activation pipeline 400 of FIG. 4. It will be appreciated that, although omitted for purposes of clarity, the method 500 of FIG. 5 may include one or more preliminary blocks to perform processing to obtain information used within the context of the method 500 of FIG. 5. It will be appreciated that, although primarily presented as being performed serially, at least a portion of the functions of the method 500 may be performed contemporaneously or in a different order than as presented with respect to FIG. 5. At block 501, the method 500 begins. At block 510, an object of interest enters the space of interest with the network of cameras. At block 520, the object is detected. If the object is close to the camera (determined using D_{cam-fov,obj} and D_{L}), then the object is detected. If the object is far from the camera, the periodic image slicing for each camera is used to increase the probability of detection. At block 530, once the object disappears (i.e., the object was detected and then stops getting detected), the camera continues to monitor for the object and the length of time for which the object has not been detected is tracked. At block 540, a determination is made as to whether the length of time for which the object has not been detected satisfies a threshold (denoted as *last_seen_limit*). If the length of time for which the object has not been detected does not satisfy the threshold, then the method 500 returns to block 530 such that the camera continues to monitor for the object and the length of time for which the object has not been detected continues to be tracked (i.e., as long as the object is not detected, the object detection timer continues to run). If the length of time for which the object has not been detected does satisfy the threshold, then the method 500 proceeds to block 550. At block 550, the camera with which the object was last detected and the closest camera use image slicing for attempting to detect the object. Here, image slicing is activated for the camera with which the object was last detected and the closest camera based on a determination that the length of time for which the object has not been detected satisfies the threshold, and then the camera with which the object was last detected and the closest camera use image slicing for attempting to detect the object. At block 560, a determination is made as to whether the object has been detected. If the object has been detected, then the method 500 proceeds to block 599 where the method 500 ends. If the object has not been detected, then the method 500 proceeds to block 570. At block 570, a determination is made as to whether a length of time for which image slicing has been activated for the camera and the closest camera exceeds a threshold. If the length of time for which image slicing has been activated for the camera does not exceed the threshold, then the method 500 returns to block 560 such that the image slicing continues to be used to monitor for the object and the length of time for which image slicing has been activated continues to be tracked (i.e., as long as the object is not detected, the image slicing activation timer continues to run). If the length of time for which image slicing has been activated for the camera does not exceed the threshold, then the method 500 proceeds to block 580. At block 580, the camera is deselected for image slicing and the method 500 proceeds to block 599 where the method 500 ends. At block 599, the method 500 ends.

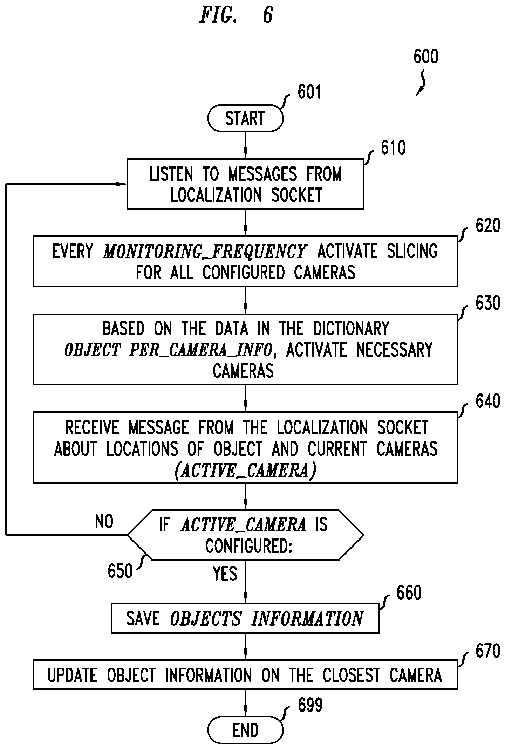

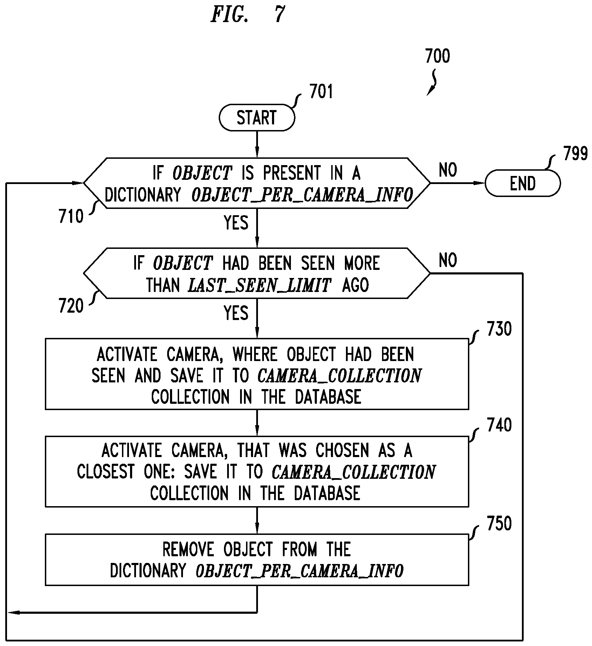

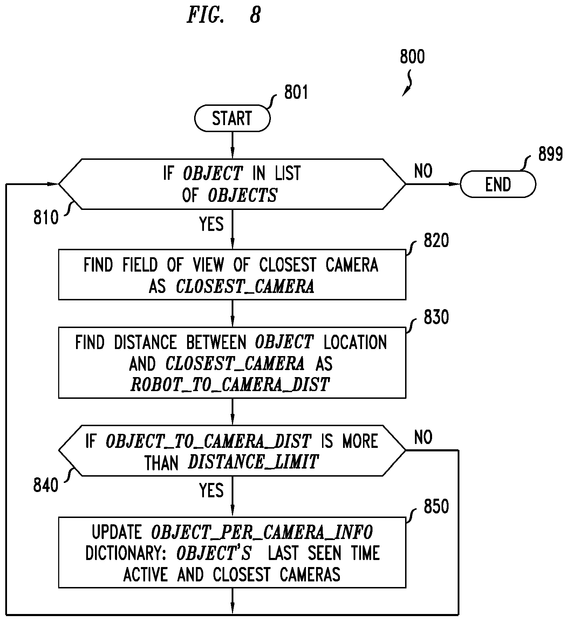

FIG. 6 depicts an example embodiment of a method for use of a combination of periodic monitoring and camera selection for use in image slicing for object detection. It will be appreciated that the method 600 of FIG. 6 may be used to implement portions of the slicing activation pipeline 400 of FIG. 4 and/or portions of the method 500 of FIG. 5. It will be appreciated that, although omitted for purposes of clarity, the method 600 of FIG. 6 may include one or more preliminary blocks to perform processing to obtain information used within the context of the method 600 of FIG. 6. It will be appreciated that, although primarily presented as being performed serially, at least a portion of the functions of the method 600 may be performed contemporaneously or in a different order than as presented with respect to FIG. 6. At block 601, the method 600 begins. At block 610, listen to messages from the localization socket. At block 620, activate slicing for all configured camera every *monitoring*_*frequency,* where *monitoring*_*frequency* indicates the frequency with which slicing is activated for all cameras for periodic monitoring. At block 630, activate necessary cameras based on the data in the *object*_*per*_*camera info* dictionary, which is a dictionary which includes information identifying the objects that are detected in the field of view of the camera. In at least some example embodiments, the block 630 may be implemented using the method of FIG. 7. At block 640, receive, from the localization socket, a message including information indicative of the location(s) of the object and the current camera(s) for which image slicing has been activated for the object (denoted as *active_camera*). At block 650, a determination is made as to whether the current camera(s) for which image slicing has been activated for the object is configured. If the current camera(s) for which image slicing has been activated for the object is not configured, then the method 600 returns to block 610 to continue to listen to messages from the localization socket. If the current camera(s) for which image slicing has been activated for the object is configured, then the method 600 proceeds to block 660. At block 660, save objects information. At block 670, update object information on the closest camera. In at least some example embodiments, the block 670 may be implemented using the method of FIG. 8. At block 699, the method 600 ends.

FIG. 7 depicts an example embodiment of a method for camera selection for use in image slicing for object detection. It will be appreciated that the method 700 of FIG. 7 may be used to implement portions of the slicing activation pipeline 400 of FIG. 4 and/or portions of the method 500 of FIG. 5. It will be appreciated that the method 700 of FIG. 7 may be used to implement block 630 of the method 600 of FIG. 6. It will be appreciated that, although omitted for purposes of clarity, the method 700 of FIG. 7 may include one or more preliminary blocks to perform processing to obtain information used within the context of the method 700 of FIG. 7. It will be appreciated that, although primarily presented as being performed serially, at least a portion of the functions of the method 700 may be performed contemporaneously or in a different order than as presented with respect to FIG. 7. At block 701, the method 700 begins. At block 710, a determination is made as to whether an object for which camera selection is being performed is present in the *object*_*per*_*camera_info* dictionary, which is a dictionary which includes information identifying the objects that are detected in the field of view of the camera. If the object for which camera selection is being performed is not present in the *object*_*per*_*camera_info* dictionary, then the method 700 proceeds to block 799, where the method 700 ends. If the object for which camera selection is being performed is present in the *object*_*per*_*camera info* dictionary, then the method 700 proceeds to block 720. At block 720, a determination is made as to whether a threshold length of time (denoted as *last_seen_limit,* and which represents the length of time after which the camera closest to the object last seen is activated for slicing) has passed since the object was last detected by the camera. If a threshold length of time (*last_seen_limit*) has not passed since the object was last detected by the camera, then the method 700 returns to block 710. If a threshold length of time (*last_seen_limit*) has passed since the object was last detected by the camera, then the method 700 proceeds to block 730. At block 730, the camera on which the object was last detected is activated for image slicing. This camera is saved to the *camera collection* in the database, where *camera collection* is the list of cameras currently activated for image slicing. At block 740, the closest camera selected as the camera closest to the camera on which the object was last detected is activated for image slicing. This closest camera is saved to the *camera collection* in the database, where *camera collection* is the list of cameras currently activated for image slicing. At block 750, the object is removed from the *object*_*per*_*camera_info* dictionary, which is the dictionary which includes information identifying the objects that are detected in the field of view of the camera. From block 750, the method 700 returns to block 710.

FIG. 8 depicts an example embodiment of a method for closest camera selection for use in image slicing for object detection. It will be appreciated that the method 800 of FIG. 8 may be used to implement portions of the slicing activation pipeline 400 of FIG. 4 and/or portions of the method 500 of FIG. 5. It will be appreciated that the method 800 of FIG. 8 may be used to implement block 670 of the method 600 of FIG. 6. It will be appreciated that, although omitted for purposes of clarity, the method 800 of FIG. 8 may include one or more preliminary blocks to perform processing to obtain information used within the context of the method 800 of FIG. 8. It will be appreciated that, although primarily presented as being performed serially, at least a portion of the functions of the method 800 may be performed contemporaneously or in a different order than as presented with respect to FIG. 8. At block 801, the method 800 begins. At block 810, a determination is made as to whether an object for which camera selection is being performed is present in the *object*_*per*_*camera_info* dictionary, which is a dictionary which includes information identifying the objects that are detected in the field of view of the camera. If the object for which camera selection is being performed is not present in the *object*_*per*_*camera_info* dictionary, then the method 800 proceeds to block 899, where the method 800 ends. If the object for which camera selection is being performed is present in the *object*_*per*_*camera_info* dictionary, then the method 800 proceeds to block 820. At block 820, the field of view of the closest camera (denoted as *closest_camera*) is determined. This closest camera (*closest_camera*) is the camera with the FoV that is closest to the given object, based on the current predicted location of the object and a priori computation of camera FoV. It is noted that this camera with the FoV that is closest to the given object may be the camera with the closest unobstructed view of the object (or, if the view is partially obstructed, with an acceptable level of obstruction of the object). At block 830, the distance between the location of the object and the closest camera (*closest_camera*) is determined. This distance is denoted as *object_to_camera_dist* (and also may be represented as D_{cam-location,obj}). At block 840, a determination is made as to whether the distance between the location of the object and the closest camera (*object_to_camera_dist*) is greater than a threshold (denoted as *distance_limit*). If the distance between the location of the object and the closest camera is not greater than a threshold (*object_to_camera_dist < distance_limit*), then the method 800 returns to block 810. If the distance between the location of the object and the closest camera is greater than a threshold (*object_to_camera_dist > distance_limit*), then the method 800 proceeds to block 850. At block 850, the *object*_*per*_*camera_info* dictionary, which is the dictionary which includes information identifying the objects that are detected in the field of view of the camera, is updated to include the time at which the object was last detected and an indication of the closest camera.

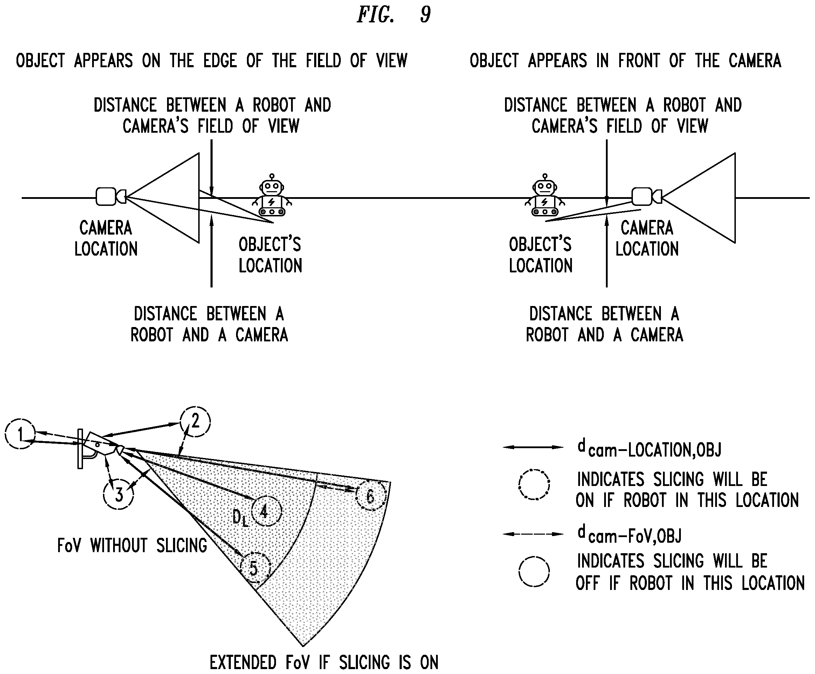

FIG. 9 depicts example embodiments of image slicing activation and image slicing deactivation as a function of the position of the object of interest that is being detected relative to the camera.

For example, if the distance between the object and the closest camera location (denoted as D_{cam-location,obj}) is relatively small (e.g., less than D_{L}), then it is assumed that the object will appear in front of the camera and, thus, no image slicing will be needed (i.e., the object will be big enough to be detected). This is illustrated as object locations "1", "2" "3", and "4" in FIG. 9, for which image slicing is indicated as being "OFF".

For example, if an object appears on the edge of the closest camera field of view, in this case its distance to the camera location is large (e.g., greater than D_{L}) and, thus, image slicing should be activated. This is illustrated as object location "5" in FIG. 9, for which image slicing is indicated as being "ON".

For example, once the object disappears from the current scene, the current camera and the closest camera will be activated for image slicing. This is illustrated as object location "6" in FIG. 9, for which image slicing is indicated as being "ON". It is noted that the current camera will be activated for image slicing as the object could still be at the same corridor, but the detection could be lost.

It will be appreciated that these are merely a few of the scenarios in which intelligent activation and deactivation of image slicing may be employed to support range extension for improved object detection in camera systems.

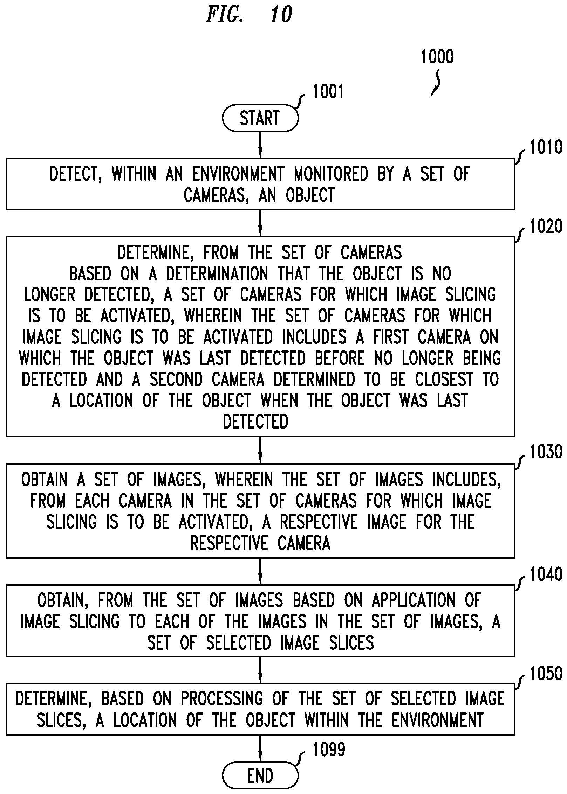

FIG. 10 depicts an example embodiment of a method for selecting cameras for use in image slicing for object detection. It will be appreciated that, although primarily presented as being performed serially, at least a portion of the functions of the method 1000 may be performed contemporaneously or in a different order than as presented with respect to FIG. 10.

At block 1001, the method 1000 begins.

At block 1010, detect, within an environment monitored by a set of cameras, an object. In at least some example embodiments, the detection of the object may include determining, for a camera from the set of cameras on which the object is detected, a distance between a location of the camera and a location of the object, and detecting the object based on a determination that the distance between the location of the camera and the location of the object satisfies a threshold. In at least some example embodiments, the detection of the object may include activating, periodically based on a determination that a layout of the set of cameras is not known, image slicing for each of the cameras in the set of cameras, and detecting the object based on the image slicing for each of the cameras in the set of cameras.

At block 1020, determine, from the set of cameras based on a determination that the object is no longer detected, a set of cameras for which image slicing is to be activated, wherein the set of cameras for which image slicing is to be activated includes a first camera on which the object was last detected before no longer being detected and a second camera from the set of cameras determined to be closest to a location of the object when the object was last detected. In at least some example embodiments, the set of cameras for which image slicing is to be activated is determined based on a determination that a length of time since the object was last detected satisfies a threshold. In at least some example embodiments, the second camera from the set of cameras may be determined to be closest to the location of the object when the object was last detected based on a determination that the second camera has a field of view closest to the location of the object when the object was last detected. In at least some example embodiments, the selection of the second camera may include computing, for each camera in the set of cameras, a respective field of view of the camera, determining a set of distance values that includes, for each camera in the set of cameras, a respective distance between a location of the object when the object was last detected and the respective field of view of the camera, and selecting, based on the set of distance values, the second camera from the set of cameras determined to be closest to the location of the object when the object was last detected. In at least some example embodiments, computing the respective field of view of the camera may include receiving a homography matrix computed using a reference image resolution matching an image resolution of the respective image from the respective camera, obtaining a set of points by computing, for each pixel in a set of pixels of the respective image based on the homography matrix, a respective point specifying a physical location of an area captured by the respective pixel, filtering, from the set of points to form a filtered set of points, any point in the set of points that exceeds a predefined distance threshold, and computing, based on a convex shape construction and using the filtered set of points, the respective field of view of the camera.

At block 1030, obtain a set of images, wherein the set of images includes, from each camera in the set of cameras for which image slicing is to be activated, a respective image for the respective camera. In at least some example embodiments, the set of images may include at least one image from each camera in the set of cameras for which image slicing is to be activated (e.g., at least one image captured by the first camera and at least one image captured by the second camera).

At block 1040, obtain, from the set of images based on application of image slicing to each of the images in the set of images, a set of selected image slices. In at least some example embodiments, obtaining the set of selected image slices may include obtaining, for each image in the set of images, a respective set of image slices for the respective image based on application of image slicing to the respective image in the set of images (e.g., by determining a number of slices into which to slice the respective image in the set of images, such as based on at least one of a distance between the camera that captured the respective image and the object or a number of pixels in a bounding box of detection of the object, and performing, based on the number of slices into which to slice the respective image in the set of images, slicing of the respective image in the set of images to form the respective set of image slices for the respective image in the set of images), and obtaining the set of selected image slices by selecting, from each of the set of images slices formed from application of image slicing to the respective image in the set of images, at least a portion of the image slices in the respective set of image slices (e.g., based on at least one of a region of interest (ROI)-based slice selection algorithm or a crop-based slice selection algorithm).

At block 1050, determine, based on processing of the set of selected image slices, a location of the object within the environment. The determination of the location of the object within the environment may be performed using various image slice processing capabilities. The determination of the location of the object within the environment may include determining an actual location of the object within the environment, determining an estimate of the location of the object within the environment, or the like.

At block 1099, the method 1000 ends.

In Step 3 discussed with respect to FIG. 2 (denoted as block 230 in FIG. 2), after a camera has been selected for which image slicing has been activated, a number of image slices for the image slicing is determined. It is noted that, if image slicing has been activated, this has likely been triggered by either an object approaching the camera from a distance or detection of a small object in the image plane during periodic monitoring (although it will be appreciated that image slicing may be activated under other conditions). It is further noted that it is possible that there are other objects in the scene already that have not required image slicing and the camera images are being process in a normal fashion.

The determination of the number of image slices may be better understood by first considering a number of definitions of various variables which may be applied within the context of the process for determining the number of image slices for image slicing. The ML model training image size may be denoted as (ML_{H}, ML_{W}), where ML_{H} represents the height for the ML model training image size and ML_{W} represents the width for the ML model training image size. The overlap factor between image slices may be denoted as O_{f}. The size of the image being sliced may be denoted as (H, W), where H represents the height of the image being sliced and W represents the width of the image being sliced. The maximum number of image slices may be denoted as Nₘₐₓ. The smallest bounding box size that allows recognition/detection of the objects in the class of objects for which the ML model was trained may be denoted as MLₚᵢₓₑₗₛ. The number of image slices is denoted as N. The number of horizontal and vertical splits used to achieve image slicing may be denoted as (Sₕ, Sᵥ) where Sₕ is the number of horizontal splits used to achieve image slicing the Sᵥ is the number of vertical splits used to achieve image slicing.

The number of image slices N may be given by N = (Sₕ + 1) * (Sᵥ + 1). For example, image slicing via two horizontal splits and two vertical splits results in nine image slices. For example, image slicing via one horizontal split and one vertical split results in four image slices. For example, image slicing via three horizontal splits and three vertical splits results in sixteen image slices. The use of vertical splits for image slicing to form a set of image slices is depicted in FIG. 11. As illustrated in FIG. 11, image slicing via two horizontal splits and two vertical splits gives nine image slices which have been labeled as "SLICE 1" through "SLICE 9". It will be appreciated that application of image slicing to an image may result in slicing of images into fewer or more slices.

The maximum number of image slices Nₘₐₓ may be determined as: Nₘₐₓ = [H / ((1-O_{f}) * ML_{H})] * [W / ((1-O_{f}) * MLw)]. For example, if the training image size is (540,960), O_{f}=0.2, and image being sliced is (1080,1920), then the maximum number of image slices Nₘₐₓ is nine.

It is noted that, once image slicing has been activated for a camera, there are two independent criteria which may be used to vary the number of image slices: (1) distance of the object (based on the last detection) to the camera location or (2) number of pixels in the bounding box or contour of the detection.

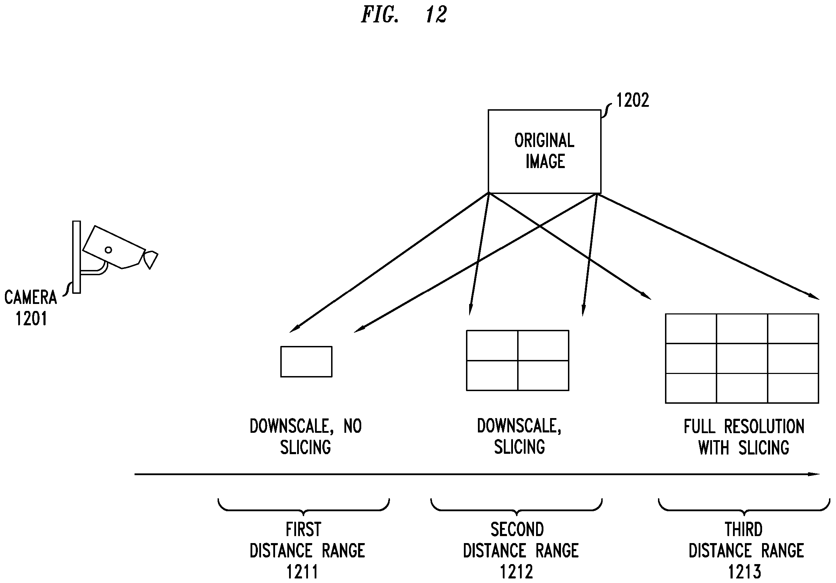

As indicated above, once image slicing has been activated for a camera, one criteria which may be used to vary the number of image slices is distance of the object (based on the last detection) to the camera location. This is straightforward as the number of image slices increases, as distance increases, at specific distance thresholds. An example embodiment is illustrated in FIG. 12, which depicts an example embodiment for varying the number of image slices used in image slicing as a function of the distance of the object to the camera location. As depicted in FIG. 12, as distance from a camera 1201 increases, the number of image slices of an original image 1202 increases. Within the first distance range 1211, no image slicing is performed (i.e., downscaling of the original image 1202 without image slicing). Within the second distance range 1212, image slicing is performed and the original image is sliced into four image slices (i.e., downscale, with image slicing). Within the third distance range 1213, image slicing is performed and the original image is sliced into nine image slices (i.e., full resolution, with image slicing). It will be appreciated that fewer or more distance ranges and associated distance thresholds may be defined for varying the number of image slices as a function of distance.

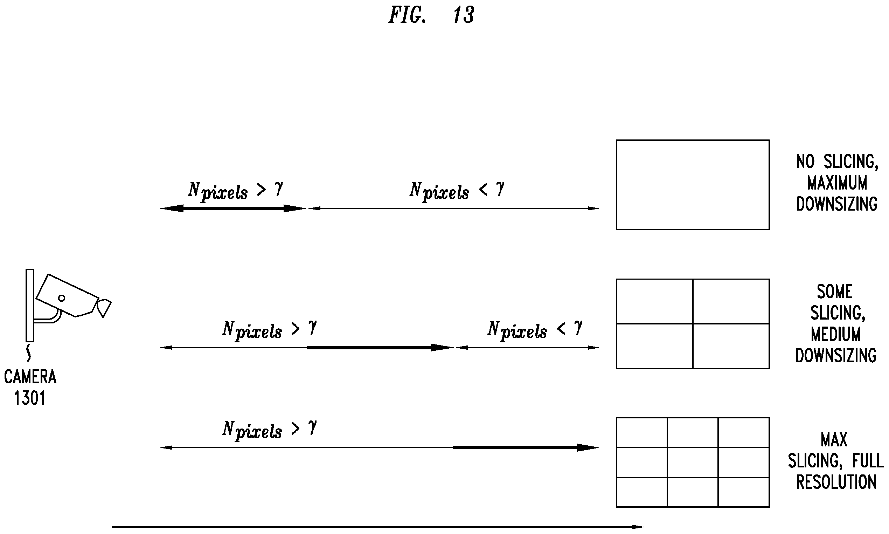

As indicated above, once image slicing has been activated for a camera, one criteria which may be used to vary the number of image slices is number of pixels in the bounding box or contour of the detection. This can be determined when a detection happens, and bounding box information is available. To be able to use this, it is assumed that information on the smallest bounding box size that allows recognition/detection of the objects in the class of objects for which the ML model was trained is available. This is referred to as MLₚᵢₓₑₗₛ. An example embodiment is depicted in FIG. 13. As depicted in FIG. 13, a camera 1301 captures an original image 1302 and the number of image slices of the original image 1302 varies based on the number of pixels in the bounding box or contour of the detection. Within the first range, no image slicing is performed (i.e., downscaling of the original image 1302 without image slicing). Within the second range, image slicing is performed and the original image is sliced into four image slices (i.e., downscale, with image slicing). Within the third range, image slicing is performed and the original image is sliced into nine image slices (i.e., full resolution, with image slicing). It will be appreciated that fewer or more ranges and associated number of pixel thresholds may be defined for varying the number of image slices as a function of number of pixels in the bounding box or contour of the detection.

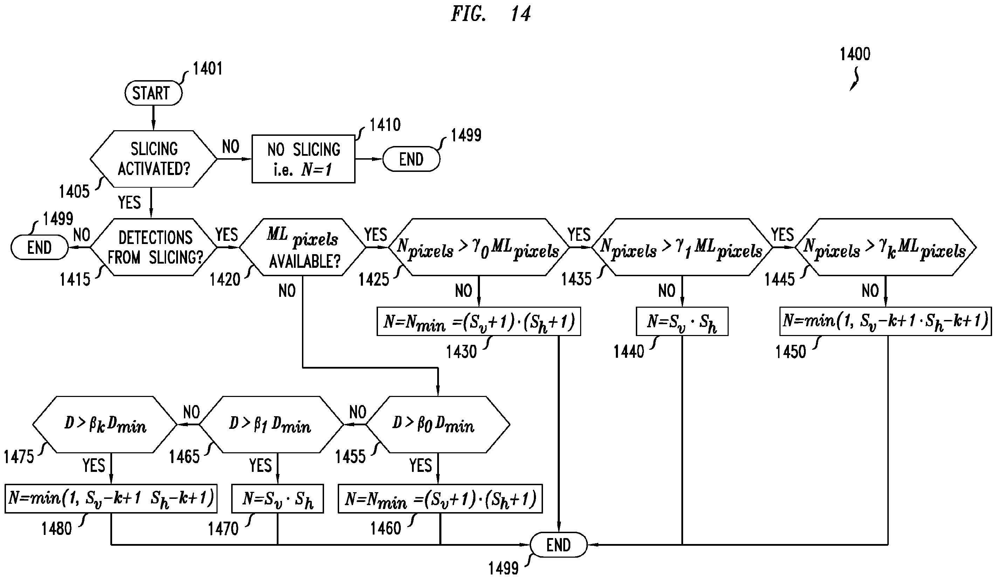

It is noted that, given that there may be multiple objects in a scene and only one could trigger image slicing, there are at least three scenarios to consider (1) image slicing was activated and no other detections in the past T seconds were observed based on the image without image slicing, (2) slicing was activated and detections were observed in the past T seconds based on the image without image slicing, (3) slicing was not activated, and detections were observed in the past T seconds based on the image without image slicing. Additionally, if the object is moving away from the camera then switch to more image slices with higher resolution and, alternatively, if the object is moving toward the camera then switch to less image slices with lower resolution. It will be appreciated application of these scenarios within the context of an overall algorithm to select the number of image slices, N, may be further understood by way of reference to FIG. 14.

FIG. 14 depicts an example embodiment of a method for determining the number of image slices to be used when slicing an image as a function of distance or number of pixels. It will be appreciated that, although omitted for purposes of clarity, the method 1400 of FIG. 14 may include one or more preliminary blocks to perform processing to obtain information used within the context of the method 1400 of FIG. 14. It will be appreciated that, although primarily presented as being performed serially, at least a portion of the functions of the method 1400 may be performed contemporaneously or in a different order than as presented with respect to FIG. 14.

At block 1401, the method 1400 begins.

At block 1405, a determination is made as to whether image slicing is activated. If image slicing is not activated, then the method 1400 proceeds to block 1410 (at which point the number of slices is set equal to one (i.e., N = 1), and then the method 1400 proceeds to block 1499 where the method 1400 ends. If image slicing is activated, then the method 1400 proceeds to block 1415.

At block 1415, a determination is made as to whether there are detections from image slicing. If there are not detections from image slicing, then the method 1400 proceeds to block 1499 where the method 1400 ends. If there are detections from image slicing, then the method 1400 proceeds to block 1420.

At block 1420, a determination is made as to whether the smallest bounding box size that allows recognition/detection of the objects in the class of objects for which the ML model was trained (MLₚᵢₓₑₗₛ) is available. If MLₚᵢₓₑₗₛ is available, then the method 1400 proceeds to a first branch of the method 1400 in which the number of pixels is used to determine the number of image slices (illustratively, the method 1400 proceeds to block 1425 and this branch of the method 1400 includes blocks 1425 - 1450). If MLₚᵢₓₑₗₛ is not available, then the method 1400 proceeds to a second branch of the method 1400 in which the distance to the camera is used to determine the number of image slices (illustratively, the method 1400 proceeds to block 1455 and this branch of the method 1400 includes blocks 1455 - 1480).

At block 1425, a determination is made as to whether the number of pixels (Nₚᵢₓₑₗₛ) is greater than the smallest bounding box size (MLₚᵢₓₑₗₛ) adjusted by a factor (γ₀). Namely, a determination is made as to whether Nₚᵢₓₑₗₛ > (γ₀)MLₚᵢₓₑₗₛ. If Nₚᵢₓₑₗₛ is not greater than (γ₀)MLₚᵢₓₑₗₛ then the method 1400 proceeds to block 1430 (at which point the number of image slices N is set equal to Nₘₐₓ (i.e., N = Nₘₐₓ = (Sₕ + 1) * (Sᵥ + 1)), and then the method 1400 proceeds to block 1499 where the method 1400 ends. If Nₚᵢₓₑₗₛ is greater than (γ₀)MLₚᵢₓₑₗₛ then the method 1400 proceeds to block 1435.

At block 1435, a determination is made as to whether the number of pixels (Nₚᵢₓₑₗₛ) is greater than the smallest bounding box size (MLₚᵢₓₑₗₛ) adjusted by a factor (γ₁). Namely, a determination is made as to whether Nₚᵢₓₑₗₛ > (γ₁)MLₚᵢₓₑₗₛ. If Nₚᵢₓₑₗₛ is not greater than (γ₁)MLₚᵢₓₑₗₛ then the method 1400 proceeds to block 1440 (at which point the number of image slices N is set equal to the product of Sₕ and Sᵥ (i.e., N = Sₕ * Sᵥ)), and then the method 1400 proceeds to block 1499 where the method 1400 ends. If Nₚᵢₓₑₗₛ is greater than (γ₁)MLₚᵢₓₑₗₛ then the method 1400 proceeds to block 1445.

At block 1445, a determination is made as to whether the number of pixels (Nₚᵢₓₑₗₛ) is greater than the smallest bounding box size (MLₚᵢₓₑₗₛ) adjusted by a factor (γₖ). Namely, a determination is made as to whether Nₚᵢₓₑₗₛ > (γₖ)MLₚᵢₓₑₗₛ. If Nₚᵢₓₑₗₛ is not greater than (γₖ)MLₚᵢₓₑₗₛ then the method 1400 proceeds to block 1440 (at which point the number of image slices N is set based on a minimization function (i.e., N = min(1, [(Sₕ -k +1) * (Sᵥ - k +1)])), and then the method 1400 proceeds to block 1499 where the method 1400 ends. If Nₚᵢₓₑₗₛ is greater than (γₖ)MLₚᵢₓₑₗₛ then the method 1400 proceeds to block 1499 where the method 1400 ends.

At block 1455, a determination is made as to whether the distance (D) is greater than the maximum distance (Dₘₐₓ) adjusted by a factor (β₀). Namely, a determination is made as to whether D > (β₀)Dₘₐₓ. If D is greater than ((β₀)Dₘₐₓ then the method 1400 proceeds to block 1460 (at which point the number of image slices N is set equal to Nₘₐₓ (i.e., N = Nₘₐₓ = (Sₕ + 1) * (Sᵥ + 1)), and then the method 1400 proceeds to block 1499 where the method 1400 ends. If D is not greater than (β₀)Dₘₐₓ then the method 1400 proceeds to block 1465.

At block 1465, a determination is made as to whether the distance (D) is greater than the maximum distance (Dₘₐₓ) adjusted by a factor (β₁). Namely, a determination is made as to whether D > (β₁)Dₘₐₓ. If D is greater than (β₁)Dₘₐₓ then the method 1400 proceeds to block 1470 (at which point the number of image slices N is set equal to the product of Sₕ and Sᵥ (i.e., N = Sₕ * Sᵥ)), and then the method 1400 proceeds to block 1499 where the method 1400 ends. If D is not greater than (β₁)Dₘₐₓ then the method 1400 proceeds to block 1475.

At block 1475, a determination is made as to whether the distance (D) is greater than the maximum distance (Dₘₐₓ) adjusted by a factor (βₖ). Namely, a determination is made as to whether D > (βₖ)Dₘₐₓ. If D is greater than (βₖ)Dₘₐₓ then the method 1400 proceeds to block 1480 (at which point the number of image slices N is set based on a minimization function (i.e., N = min(1, [(Sₕ -k +1) * (Sᵥ -k +1)])), and then the method 1400 proceeds to block 1499 where the method 1400 ends. If D is not greater than ((β₁)Dₘₐₓ then the method 1400 proceeds to block 1499 where the method 1400 ends.

At block 1499, the method 1400 ends.

FIG. 15 depicts an example embodiment of a method for determining the number of image slices to be used when slicing an image for use in object detection. It will be appreciated that, although primarily presented as being performed serially, at least a portion of the functions of the method 1500 may be performed contemporaneously or in a different order than as presented with respect to FIG. 15.

At block 1501, the method 1500 begins.

At block 1510, receive an image captured by a camera. The image that is received depicts an object.

At block 1520, determine, based on at least one of a distance between the camera and the object or a number of pixels in a bounding box of detection of the object, a number of image slices into which to slice the image.

The number of image slices into which to slice the image may vary in different ways. In at least some example embodiments, the number of image slices into which to slice the image increases with an increase in the distance between the camera and the object based on a set of distance thresholds. In at least some example embodiments, the number of image slices into which to slice the image increases with an increase in the number of pixels in the bounding box of detection of the object. The number of image slices into which to slice the image may vary in other ways.

The number of image slices into which to slice the image may be determined in a number of ways.

In at least some example embodiments, determining the number of image slices into which to slice the image may include determining, based an object class of the object, an ML model trained for the object class, determining whether information indicative of a smallest bounding box size, that allows for detection of objects in the object class for which the ML model was trained, is available, and determining, based on whether the information indicative of the smallest bounding box size is available, whether to determine the number of image slices into which to slice the image based on the distance between the camera and the object or based on the number of pixels in the bounding box of detection of the object.

In at least some example embodiments, determining the number of image slices into which to slice the image may include determining a smallest bounding box size that allows for detection of objects in an object class for which the ML model was trained, and determining the number of slices into which to slice the image based on comparison of the number of pixels in the bounding box of detection of the object to a set of thresholds determined based on the smallest bounding box size. In at least some example embodiments, the number of image slices into which to slice the image is set equal to a first value based on a determination that the number of pixels in the bounding box of detection of the object is less than a first threshold, wherein the first value is a maximum number of image slices, the number of image slices into which to slice the image is set equal to a second value less than the first value based on a determination that the number of pixels in the bounding box of detection of the object is greater than the first threshold and less than a second threshold, or the number of image slices into which to slice the image is set equal to a third value less than the second value based on a determination that the number of pixels in the bounding box of detection of the object is greater than the second threshold and less than a third threshold.

In at least some example embodiments, determining the number of image slices into which to slice the image may include determining a maximum distance between the camera and the object, and determining the number of image slices into which to slice the image based on comparison of the distance between the camera and the object to a set of thresholds determined based on the maximum distance between the camera and the object. In at least some example embodiments, the number of image slices into which to slice the image is set equal to a first value based on a determination that the distance between the camera and the object is less than a first threshold, wherein the first value is a maximum number of image slices, the number of image slices into which to slice the image is set equal to a second value less than the first value based on a determination that the distance between the camera and the object is greater than the first threshold and less than a second threshold, or the number of image slices into which to slice the image is set equal to a third value less than the second value based on a determination that the distance between the camera and the object is greater than the second threshold and less than a third threshold.

At block 1530, slice, based on the number of image slices into which to slice the image, the image into a set of image slices.

At block 1540, perform object detection based on the set of image slices.

At block 1599, the method 1500 ends.

In Step 4 discussed with respect to FIG. 2 (denoted as block 240 in FIG. 2), after a number of image slices for the image slicing is determined, a determination is made as to which of the image slices to process. The selection of the image slices to be processed may be based on compute constraints associated with performing the slice processing, which may vary in different contexts. For example, in a factory environment where robots are known to follow specific paths then it is likely that the robots will appear and be detected in specific areas of images and this may be used to select subsets of the image slices of the image for processing (e.g., the number of image slices that needs to be processed can be reduced to conserve compute resources). For example, in an autonomous driving environment where the paths taken by vehicles may not be easily predicted and may be more random then selection of the image slices of the image for processing may be performed based on other factors in an attempt to reduce the number of image slices of the image selected for processing (e.g., the number of image slices that needs to be processed can be controlled to conserve compute resources). It will be appreciated that a number of algorithms may be utilized for determining which image slices to process (including a region of interest (ROI)-based slice selection algorithm and a crop-based slice selection algorithm, each of which is discussed in detail below).

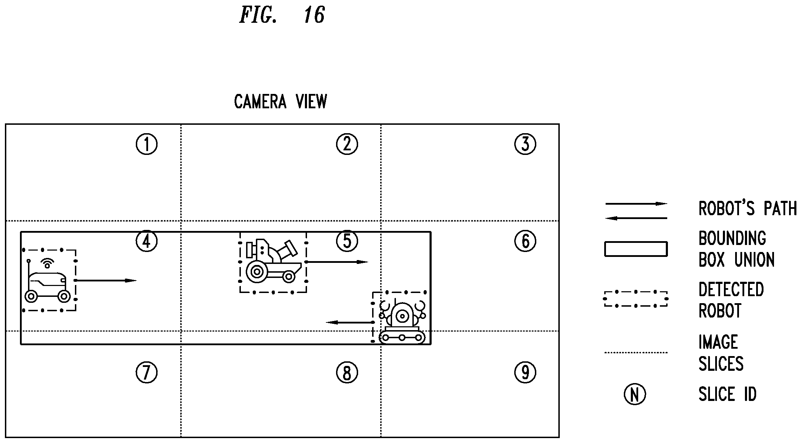

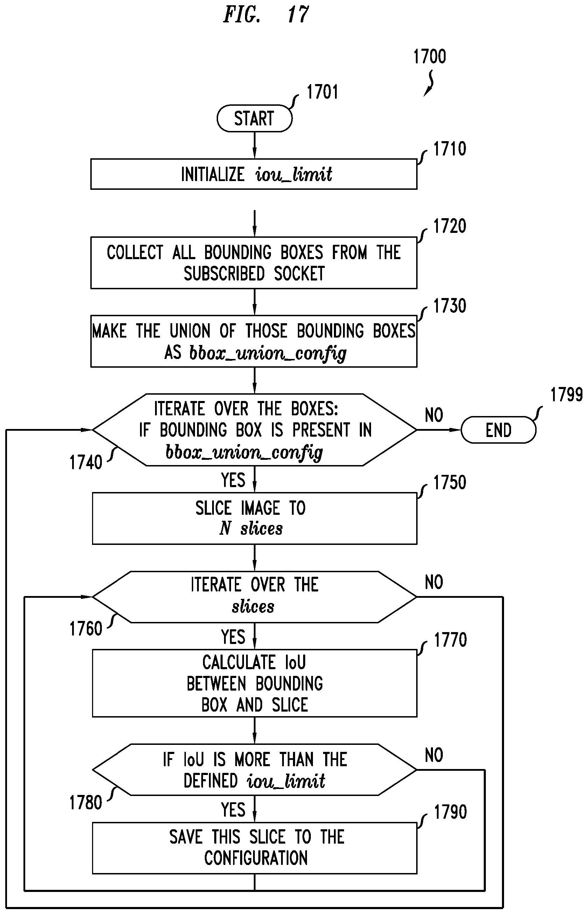

In at least some example embodiments, selection of the image slices of an image to be processed may be performed using an ROI-based slice selection algorithm. The ROI-based slice selection algorithm may be performed as follows. First, subscribe to the service, which has associated therewith detection results (e.g., bounding boxes and image frames). Second, within a certain time-limit, collect the necessary data (including collecting bounding boxes for all detected objects and combining them into one united box) and save one image per camera. Third, for each image from each camera, slice the image into N slices and obtain the location of the image slice (i.e., the (X, Y) coordinates of the image slice). Fourth, calculate the Intersection over Union (IoU) between each image slice and the union of the bounding boxes. Finally, if IoU is greater than a certain threshold, then use those image slices for processing. It is noted that the ROI-based slice selection algorithm may be further understood by way of reference to FIG. 16 and FIG. 17.

FIG. 16 depicts selection of a subset of image slices of an image based on an ROI-based slice selection algorithm. As illustrated in FIG. 16, a robot moves in a path within the field of view of a camera, which results in capture of an image as depicted in FIG. 16. The image is sliced into nine image slices, labeled using slice identifiers referred to as "slice 1" through "slice 9", in a three-by-three grid. In this example, the bounding box union is depicted. In this example, assuming no occlusions, slice 4, slice 5, and slice 6 will be chosen for processing. Here, only three of the nine image slices of the image need to be processed, thereby reducing the compute resources consumed for detecting and tracking the robot as compared with other solutions in which the entire image would need to be processed for detecting and tracking the robot.

FIG. 17 depicts an example embodiment of an ROI-based slice selection algorithm configured to select a subset of image slices of an image for processing. It will be appreciated that, although omitted for purposes of clarity, the method 1700 of FIG. 17 may include one or more preliminary blocks to perform processing to obtain information used within the context of the method 1700 of FIG. 17. It will be appreciated that, although primarily presented as being performed serially, at least a portion of the functions of the method 1700 may be performed contemporaneously or in a different order than as presented with respect to FIG. 17. At block 1701, the method 1700 begins. At block 1710, the IoU limit is initialized (denoted as *iou_limit*). At block 1720, all bounding boxes from the subscribed socket are collected. At block 1730, the union of the bounding boxes is determined (denoted as *bbox*_*union_config*). At block 1740, iterating over the boxes, a determination is made as to whether the bounding box is present in the *bbox_union_config.* If the bounding box is present in the *bbox_union_config* then the method 1700 proceeds to block 1750, otherwise the method 1700 proceeds to block 1799 where the method 1700 ends. At block 1750, the image is sliced into N image slices. At block 1760, a determination is made as to whether to iterate over the image slices. If a determination is made not to iterate over the image slices then the method 1700 returns to block 1740, otherwise the method 1700 proceeds to block 1760. At block 1770, the IoU between the bounding box and the image slice is computed. At block 1780, a determination is made as to whether the IoU between the bounding box and the image slice is greater than the IoU limit (*iou_limit*). If the IoU between the bounding box and the image slice is not greater than the IoU limit then the method 1700 returns to block 1760 to continue to iterate over the image slices, otherwise the method 1700 proceeds to block 1790. At block 1790, based on a determination that the IoU between the bounding box and the image slice is greater than the IoU limit, then the selected image slice is saved to the configuration and the method 1700 returns to block 1760 to continue to iterate over the slices. At block 1799, the method 1700 ends.

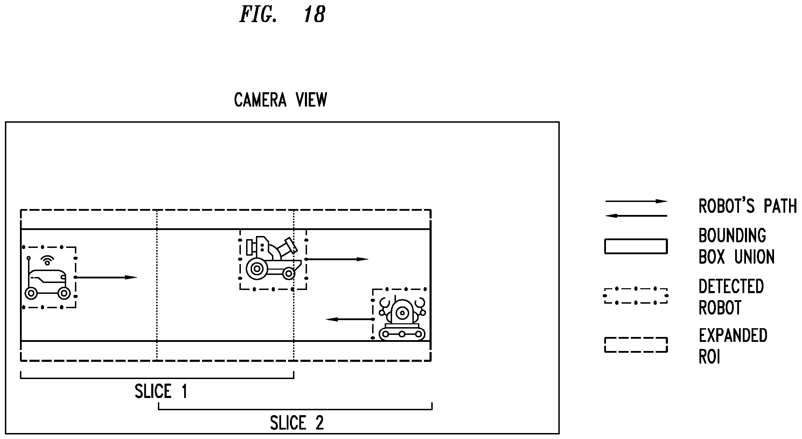

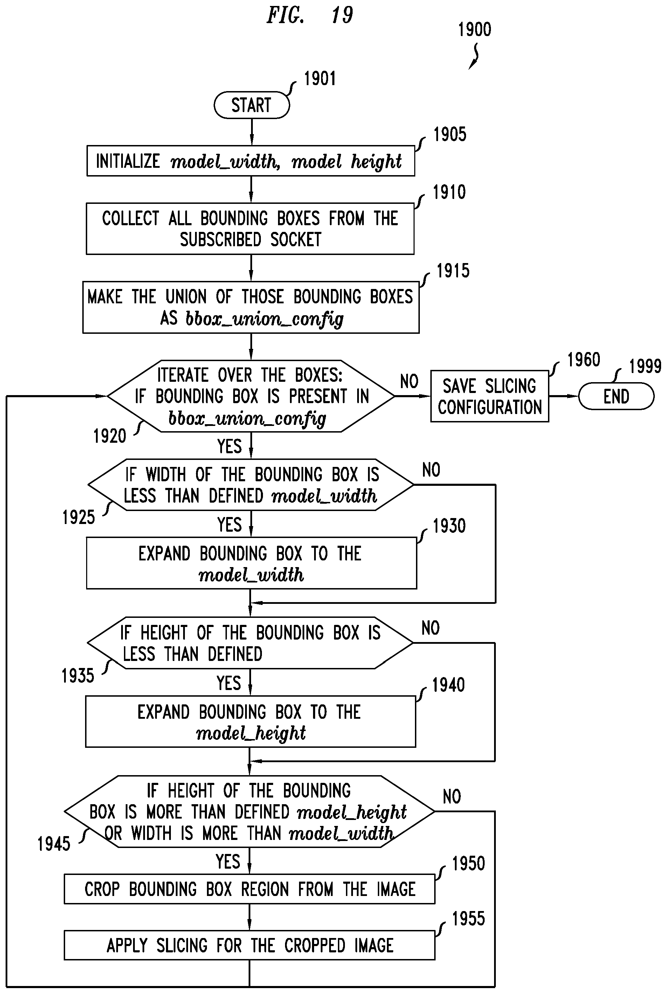

In at least some example embodiments, selection of the image slices of an image to be processed may be performed using a crop-based slice selection algorithm. The crop-based slice selection algorithm may be performed as follows. First, subscribe to the service, which has associated therewith detection results (e.g., bounding boxes and image frames). Second, within a certain time limit: (a) collect bounding boxes for all detected objects and combine them into one united box, (2) if an extrapolation parameter is activated (since it helps to expand the region of interest when the system is running without image slicing while performing data collection) then, together will the bounding boxes, collect the locations of the object and extrapolate the locations of the object into a spline, convert the received endpoints into pixel coordinates, and combine the pixels together with the union of the bounding boxes, and (3) save one image per camera. Third, expand the collected ROI to the input height and width of the model. Finally, if the height or width is more than the height or width of the model, then slice the ROI into several image slices (depending on the ROI size and the input size of the model). It is noted that the ROI-based slice selection algorithm may be further understood by way of reference to FIG. 18 and FIG. 19.

FIG. 18 depicts selection of a subset of image slices of an image based on a crop-based slice selection algorithm. As illustrated in FIG. 18, a robot moves in a path within the field of view of a camera, which results in capture of an image as depicted in FIG. 18. In this example, the bounding box union is depicted. In this example, the bounding box union is expanded to provide an ROI selected for processing. In this example, since the height or width of the expanded ROI is more than the height or width of the model, the expanded ROI is sliced into multiple slices (denoted as "slice 1" and "slice 2"). Here, only a subset of the full image need to be processed, thereby reducing the compute resources consumed for detecting and tracking the robot as compared with other solutions in which the entire image would need to be processed for detecting and tracking the robot.

FIG. 19 depicts an example embodiment of a crop-based slice selection algorithm configured to select a subset of image slices of an image for processing. It will be appreciated that, although omitted for purposes of clarity, the method 1900 of FIG. 19 may include one or more preliminary blocks to perform processing to obtain information used within the context of the method 1900 of FIG. 19. It will be appreciated that, although primarily presented as being performed serially, at least a portion of the functions of the method 1900 may be performed contemporaneously or in a different order than as presented with respect to FIG. 19. At block 1901, the method 1900 begins. At block 1905, the parameter that indicates the size of the model, in terms of height and width, is initialized (denoted as *model_width, model_height*). At block 1910, all bounding boxes from the subscribed socket are collected. At block 1915, the union of the bounding boxes is determined (denoted as *bbox_union_config*). At block 1920, iterating over the boxes, a determination is made as to whether the bounding box is present in the *bbox_union_config.* If the bounding box is present in the *bbox_union_config* then the method 1900 proceeds to block 1925, otherwise the method 1900 proceeds to block 1960. At block 1925, a determination is made as to whether the width of the bounding box is less than the defined width of the model (*model_width*). If a determination is made that the width of the bounding box is less than the defined width of the model (*model_width*) then the method 1900 proceeds to block 1930, otherwise the method 1900 skips block 1930 and proceeds to block 1935. At block 1930, based on a determination that the width of the bounding box is less than the defined width of the model (*model*_*width*), then the width of the bounding box is expanded to the defined width of the model, and then the method 1900 proceeds to block 1935. At block 1935, a determination is made as to whether the height of the bounding box is less than the defined height of the model *(model height).* If a determination is made that the height of the bounding box is less than the defined height of the model *(model height)* then the method 1900 proceeds to block 1940, otherwise the method 1900 skips block 1940 and proceeds to block 1945. At block 1940, based on a determination that the height of the bounding box is less than the defined height of the model *(model height),* then the height of the bounding box is expanded to the defined height of the model, and then the method 1900 proceeds to block 1945. At block 1945, a determination is made as to whether the height of the bounding box is greater than the defined height of the model *(model height)* or the width of the binding box is greater than the defined width of the model (*model_width*)*.* If neither the height of the bounding box is greater than the defined height of the model nor the width of the binding box is greater than the defined width of the model, then the method 1900 returns to block 1920. If either the height of the bounding box is greater than the defined height of the model or the width of the binding box is greater than the defined width of the model, then the method 1900 proceeds to block 1950. At block 1950, the bounding box region is cropped from the image to obtain a cropped image. At block 1955, slicing is applied to the cropped image and then the method 1900 returns to block 1920. At block 1960, based on a determination that the bounding box is not present in the *bbox_union config,* then the slicing configuration is saved and the method 1900 proceeds to block 1999 where the method 1900 ends. At block 1999, the method 1900 ends.

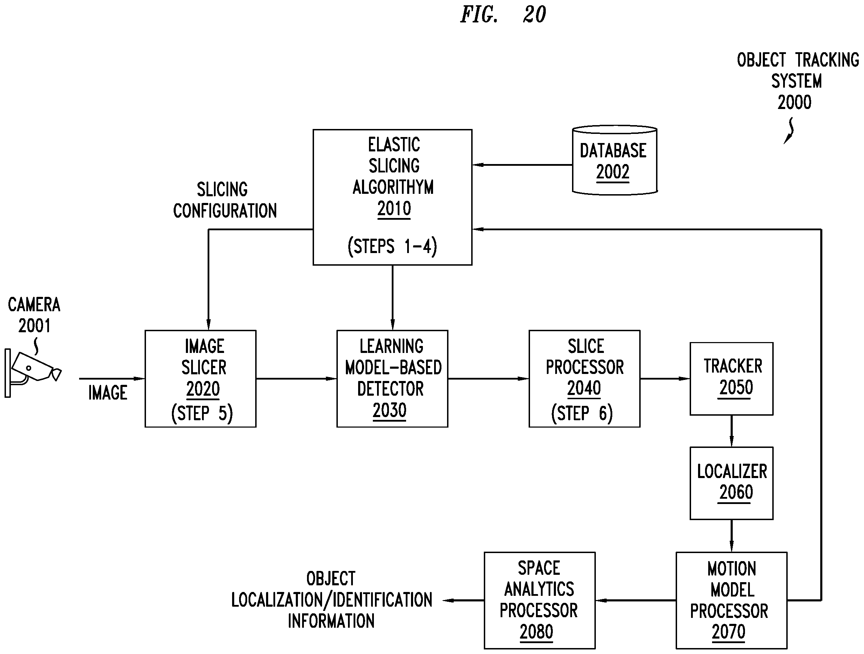

FIG. 20 depicts an example embodiment of an object tracking system configured to perform object tracking for a set of objects in an environment. As illustrated in FIG. 20, the object tracking system 2000 includes a camera 2001, a database 2002, an elastic slicing algorithm 2010, an image slicer 2020, a learning model-based detector 2030, a slice processor 2040, a tracker 2050, a localizer 2060, a motion model processor 2070, and a space analytics processor 2080. The camera 2001 captures images which may include one or more objects to be detected and tracked. The database 2002 stores a homography matrix, camera location information, and calculated FoV information. The elastic slicing algorithm 2010, based on the homography matrix from the database 2002 and feedback from the motion model processor 2070, determines a slicing configuration for use by the image slicer 2020 to slice the images from the camera 2001. The elastic slicing algorithm 2010 may determine the slicing configuration based on Steps 1 - 4 (e.g., blocks 210 - 240 of FIG. 2) presented herein. The image slicer 2020 receives the images from the camera 2001 and the slicing configuration from the elastic slicing algorithm 2020 and performs slicing of the images to form image slices, which are provided to the learning model-based detector 2030. The image slicer 2020 may perform the image slicing based on Step 5 (e.g., block 250 of FIG. 2) as presented herein. The learning model-based detector 2030 receives the image slices from the image slicer 2020 and performs model-based object detection on the image slices to detect an object. The learning model-based detector 2030 may perform the object detection based on Step 6 (e.g., block 260 of FIG. 2) as presented herein. The learning model-based detector 2030 provides object detection data, related to detection of the object in the image slices, to the slice processor 2040. The slice processor 2040 receives the object detection data for the image slices, processes the image detection data to combine detections of the object across the image slices and obtain object detection/localization information for the object, and provides the object detection/localization information for the object to the tracker 2050. The slice processor 2040 may process the image detection data to obtain the object detection/localization information for the object based on Step 7 (e.g., block 270 of FIG. 2) presented herein. The tracker 2050 receives the object detection/localization information for the object from the slice processor 2040, performs tracking of the object based on the object detection/localization information which produces object tracking information, and provides the object tracking information to the localizer 2060. The localizer 2060 receives the object tracking information for the object from the tracker 2050, performs localization of the object based on the object tracking information which produces object localization information, and provides the object localization information to the motion model processor 2070. The motion model processor 2070 receives the object localization information from the localizer 2060 and learns, based on the movement of each object in the environment, motion parameters (e.g., velocity, acceleration, or the like) to build a corresponding model that can then be used to fill missed locations (or detections), predict future locations, or the like, as well as various combinations thereof. The space analytics processor 2080 analyses received data from multiple cameras in the environment, or space, and combines them to produce a single location estimate for the object.

It will be appreciated that the various elements of the object tracking system may be implemented in various ways. In at least some example embodiments, for example, various functions of the object tracking system may be implemented using various combinations of local compute resources, edge compute resources, cloud compute resources, or the like, as well as various combinations thereof. In at least some example embodiments, for example, in order to keep latency and network bandwidth consumption relatively low, the image preprocessing / perception steps (e.g., slicing, downsizing, detection) may be kept close to the source (e.g., local compute and/or edge compute) so that no images need to be sent to the cloud compute. This is also useful in preserving privacy of sensitive data. In this case, the slicing configuration information sent from cloud compute to edge compute could be examined to check for varying slicing configuration. It will be appreciated that the various elements of the object tracking system may be implemented in various other ways.

It will be appreciated that, although primarily presented with respect to detection and tracking of a single object in a scene, object detection and tracking may be performed for multiple objects within a scene. In at least some such example embodiment, the object detection and tracking algorithm may be configured to decide when and how to activate image slicing. In at least some example embodiments, for example, the image slices may be processed together with the full resolution image and detections can be combined across all of the images, thereby allowing the detector to recognize objects that are close to the camera as well as those objects that are moving from longer distance (although it is noted that, in this case, there is always one more additional image to be processed). In at least some example embodiments, for example, image slicing may be activated for the camera based on the camera selection pipeline and, in case at least one robot is moving from longer distance, then the image slicing algorithm may be applied in order to recognize this object.

Various example embodiments for supporting object detection in machine vision systems may provide various advantages or potential advantages. For example, various example embodiments for supporting object detection in machine vision systems may be configured to support object detection based on intelligent selection of a set of cameras for which image slicing is to be used, capturing images from the set of cameras for which image slicing is to be used, and processing the images from the set of cameras for which image slicing is to be used for object detection (e.g., determining the number of image slices to be used, performing image slicing, selecting which image slices to process for object detection, processing selected image slices for object detection, combining detections across image slices, or the like, as well as various combinations thereof). For example, various example embodiments for supporting object detection in machine vision systems may be configured to utilize image slicing for improved object detection while mitigating the linear computation increases which typically result from use of image slicing for object detection. For example, various example embodiments for supporting object detection in machine vision systems may be configured to support object detection based on intelligent computation of camera FOV for cameras involved in object detection based on use of homography matrices, as opposed to simply relying on camera parameters for computation of camera FOV for cameras involved in object detection. For example, various example embodiments for supporting object detection in machine vision systems may be configured to support object detection based on intelligent selection of a set of cameras for which image slicing is to be used based on use of a combination of periodic monitoring and distance metrics that are related to the location of the object relative to camera location and field of view, without the need for a map of the space in which the cameras are deployed and the object is located (although it will be appreciated that such a map, where available, also could be used). For example, various example embodiments for supporting object detection in machine vision systems may be configured to support object detection based on intelligent selection of a number of image slices to be used for image slicing where the number of image slices to be used for image slicing is a function of distance (between the object and the camera) and the number of pixels in the bounding boxes of contours (if segmentation is used), while accounting for the computational impact from use of image slicing for object detection and without requiring manipulation of processing modules (e.g., without requiring retraining of ML detection models, without requiring training of a convolutional network using image patches, without requiring building and training of a custom neural network, and so forth). For example, various example embodiments for supporting object detection in machine vision systems may be configured to support object detection based on efficient processing of image slices using a model that learns active areas in the image plane for each camera and matches the slices to be processed to the active areas (e.g., based on a preconfigured number of image slices for the whole image or slicing in the active area region of the image). For example, various example embodiments for supporting object detection in machine vision systems may be configured to support object detection without a need to increase image resolution input to the deep neural network (DNN), which might otherwise result in a significant increase in the complexity of the DNN and, thus, affect computational costs both during the training phase and during inference. For example, various example embodiments for supporting object detection in machine vision systems may be configured to support object detection without a need to use smaller anchor sizes in the ML model, which might otherwise result in a need to collect samples with small objects for training and retrain and which may not work well when objects are not small. It will be appreciated that various example embodiments for supporting object detection in machine vision systems may provide various other advantages or potential advantages.

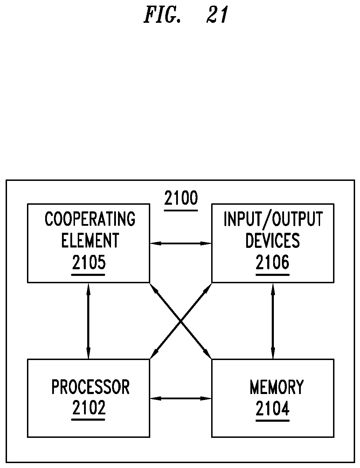

FIG. 21 depicts an example embodiment of a computer suitable for use in performing various functions presented herein.

The computer 2100 includes a processor 2102 (e.g., a central processing unit (CPU), a processor, a processor having a set of processor cores, a processor core of a processor, or the like) and a memory 2104 (e.g., a random access memory (RAM), a read-only memory (ROM), or the like). In at least some example embodiments, the computer 2100 may include at least one processor and at least one memory storing instructions which, when executed by the at least one processor, cause the computer 2100 to perform various functions presented herein.

The computer 2100 also may include a cooperating element 2105. The cooperating element 2105 may be a hardware device. The cooperating element 2105 may be a process that can be loaded into the memory 2104 and executed by the processor 2102 to implement various functions presented herein (in which case, for example, the cooperating element 2105 (including associated data structures) can be stored on a non-transitory computer readable medium, such as a storage device or other suitable type of storage element (e.g., a magnetic drive, an optical drive, or the like)).

The computer 2100 also may include one or more input/output devices 2106. The input/output devices 2106 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a hard disk drive, a compact disk drive, or the like), or the like, as well as various combinations thereof.

It will be appreciated that computer 2100 may represent a general architecture and functionality suitable for implementing functional elements described herein, portions of functional elements described herein, or the like, as well as various combinations thereof. For example, the computer 2100 may provide a general architecture and functionality that is suitable for implementing one or more elements presented herein. For example, the computer 2100 may provide a general architecture and functionality that is suitable for implementing at least one of a camera or a portion thereof, an object detection processing element or a portion thereof, or the like, as well as various combinations thereof.

It will be appreciated that at least some of the functions presented herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits, and/or any other hardware equivalents).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer readable media), transmitted via a data stream in a broadcast or other signal bearing medium, and/or stored within a memory within a computing device operating according to the instructions.

It will be appreciated that the term "non-transitory" as used herein is a limitation of the medium itself (i.e., tangible, not a signal) as opposed to a limitation of data storage persistency (e.g., RAM versus ROM).

It will be appreciated that, as used herein, "at least one of <a list of two or more elements>" and "at least one of the following: <a list of two or more elements>" and similar wording, where the list of two or more elements are joined by "and" or "or", mean at least any one of the elements, or at least any two or more of the elements, or at least all the elements.

It will be appreciated that, as used herein, the term "or" refers to a non-exclusive "or" unless otherwise indicated (e.g., use of "or else" or "or in the alternative").

It will be appreciated that, although various embodiments which incorporate the teachings presented herein have been shown and described in detail herein, those skilled in the art can readily devise many other varied embodiments that still incorporate these teachings.

## Claims

1. An apparatus, comprising means configured to perform:
detect, within an environment monitored by a set of cameras, an object;
determine, from the set of cameras based on a determination that the object is no longer detected, a set of cameras for which image slicing is to be activated, wherein the set of cameras for which image slicing is to be activated includes a first camera on which the object was last detected before no longer being detected and a second camera determined to be closest to a location of the object when the object was last detected;
obtain a set of images, wherein the set of images includes, from each camera in the set of cameras for which image slicing is to be activated, a respective image for the respective camera;
obtain, from the set of images based on application of image slicing to each of the images in the set of images, a set of selected image slices; and
determine, based on processing of the set of selected image slices, a location of the object within the environment.

2. The apparatus according to claim 1, wherein, to detect the object, the means are configured to perform:
determine, for a camera from the set of cameras on which the object is detected, a distance between a location of the camera and a location of the object; and
detect the object based on a determination that the distance between the location of the camera and the location of the object satisfies a threshold.

3. The apparatus according to any of claims 1 to 2, wherein, to detect the object, the means are configured to:
activate, periodically based on a determination that a layout of the set of cameras is not known, image slicing for each of the cameras in the set of cameras; and
detect the object based on the image slicing for each of the cameras in the set of cameras.

4. The apparatus according to any of claims 1 to 3, wherein the set of cameras for which image slicing is to be activated is determined based on a determination that a length of time since the object was last detected satisfies a threshold.

5. The apparatus according to any of claims 1 to 4, wherein the second camera from the set of cameras is determined to be closest to the location of the object when the object was last detected based on a determination that the second camera has a field of view closest to the location of the object when the object was last detected.

6. The apparatus according to any of claims 1 to 5, wherein, to select the second camera, the means are configured to perform:
compute, for each camera in the set of cameras, a respective field of view of the camera;
determine a set of distance values that includes, for each camera in the set of cameras, a respective distance between a location of the object when the object was last detected and the respective field of view of the camera; and
select, based on the set of distance values, the second camera from the set of cameras determined to be closest to the location of the object when the object was last detected.

7. The apparatus according to claim 6, wherein, to compute the respective field of view of the camera, the means are configured to perform:
receive a homography matrix computed using a reference image resolution matching an image resolution of the respective image from the respective camera;
obtain a set of points by computing, for each pixel in a set of pixels of the respective image based on the homography matrix, a respective point specifying a physical location of an area captured by the respective pixel;
filter, from the set of points to form a filtered set of points, any point in the set of points that exceeds a predefined distance threshold; and
compute, based on a convex shape construction and using the filtered set of points, the respective field of view of the camera.

8. The apparatus according to any of claims 1 to 7, wherein, to obtain the set of selected image slices, the means are configured to perform:
obtain, for each image in the set of images, a respective set of image slices for the respective image based on application of image slicing to the respective image in the set of images; and
obtain the set of selected image slices by selecting, from each of the set of images slices formed from application of image slicing to the respective image in the set of images, at least a portion of the image slices in the respective set of image slices.

9. The apparatus according to claim 8, wherein, to obtain the respective set of image slices for the respective image based on application of image slicing to the respective image in the set of images, the means are configured to perform:
determine a number of slices into which to slice the respective image in the set of images; and
perform, based on the number of slices into which to slice the respective image in the set of images, slicing of the respective image in the set of images to form the respective set of image slices for the respective image in the set of images.

10. The apparatus according to claim 9, wherein the number of slices into which the slice the respective image in the set of images is determined based on at least one of a distance between the camera that captured the respective image and the object or a number of pixels in a bounding box of detection of the object.

11. The apparatus according to claim 8, wherein the at least a portion of the image slices in the respective set of image slices for the respective image in the set of images is selected based on a region of interest (ROI)-based slice selection algorithm.

12. The apparatus according to claim 8, wherein, to select the at least a portion of the image slices in the respective set of image slices to form the respective set of selected image slices, the means are configured to perform:
collect a set of bounding boxes for the object;
combine the set of bounding boxes for the object into a united bounding box for the obj ect;
slice the image from the camera into N image slices and obtain, for each image slice of the N image slices of the respective image, the respective coordinates of the respective image slice; and
for each of the image slices, calculate an intersection over union (IoU) between the respective image slice and the united bounding box and, based on a determination that the respective IoU for the respective image slice satisfies a threshold then select the respective image slice for inclusion in the respective set of selected image slices.

13. The apparatus according to claim 8, wherein the at least a portion of the image slices in the respective set of image slices for the respective image in the set of images is selected based on a crop-based slice selection algorithm.

14. The apparatus according to claim 8, wherein, to select the at least a portion of the image slices in the respective set of image slices to form the respective set of selected image slices, the means are configured to perform:
collect a set of bounding boxes for the object;
combine the set of bounding boxes for the object into a united bounding box for the obj ect;
expand, based on a defined image size of a machine learning (ML) model, the united bounding box to form a region of interest;
crop, based on a determination a size of the region of interest is greater than the defined image size of the ML model in at least one of a height parameter or a width parameter, the bounding box region from the image to form a cropped image; and
slice the cropped image to obtain the respective set of selected image slices.

15. A computer-implemented method, comprising:
detecting, within an environment monitored by a set of cameras, an object;
determining, from the set of cameras based on a determination that the object is no longer detected, a set of cameras for which image slicing is to be activated, wherein the set of cameras for which image slicing is to be activated includes a first camera on which the object was last detected before no longer being detected and a second camera determined to be closest to a location of the object when the object was last detected;
obtaining a set of images, wherein the set of images includes, from each camera in the set of cameras for which image slicing is to be activated, a respective image for the respective camera;
obtaining, from the set of images based on application of image slicing to each of the images in the set of images, a set of selected image slices; and
determining, based on processing of the set of selected image slices, a location of the object within the environment.
